# EUROPEAN PATENT APPLICATION

(11) **EP 2 463 751 A2**
(43) Date of publication of application: **13.06.2012**
(21) Application number: 11189599.1
(22) Date of filing: 17.11.2011
(51) Int. Cl.: G06F 3/01, G06K 9/00

(54) **Gesture recognition apparatus, gesture recognition method, control program, and recording medium**

(30) Priority: 08.12.2010 JP 2010273691
(71) Applicant: Omron Corporation, Kyoto-shi, Kyoto 600-8530 (JP)
(72) Inventor: Arihara, Takeshi, Kyoto-shi, Kyoto 600-8530 (JP); Abe, Masahiro, Kyoto-shi, Kyoto 600-8530 (JP); Kinoshita, Masahiro, Kyoto-shi, Kyoto 600-8530 (JP)
(74) Representative: Wilhelms · Kilian & Partner Patentanwälte

(57) **Abstract**

A non-contact input function in which high-speed processing and high accuracy are achieved irrespective of brightness of a service space is implemented, A gesture recognition apparatus (1) of the invention includes a temperature sensor chip (6) in which plural infrared sensors are arranged, a change amount calculator (32) that specifies a change region where a temperature change is generated as a region indicating a hand based on a temperature detected by each infrared sensor of the temperature sensor chip (6); and a gesture recognition unit (34) that specifies a movement locus of the change region specified by the change amount calculator (32) and recognizes a gesture of the hand.

## Description

### BACKGROUND OF THE INVENTION

### 1. TECHNICAL FIELD

The present invention relates to a gesture recognition apparatus, a gesture recognition method, a control program, and a recording medium.

### 2. RELATED ART

Conventionally, an input function to pieces of electronic apparatus such as a mobile phone, a PDA (Personal Digital Assistant), a television set, a video player, a personal computer, and a digital camera is implemented in various ways. As to an input function implementing method, first there is a method for performing an input by bringing an object (such as a finger and a touch pen) into contact with an input apparatus (button and touch panel) (for example, see Japanese Unexamined Patent Publication Nos. 2009-071708 and 2009-168647). Second there is a method for causing the input apparatus (such as a camera) to recognize the object to perform the input to the input apparatus or an electronic apparatus in a non-contact manner (for example, see Japanese Unexamined Patent Publication No. 08-315154).

In the first contact type input function implementing method, various inputs can securely and instantaneously be performed to the electronic apparatus. However, the contact type input function implementing method has the following disadvantages.

When a screen (touch panel) is excessively large, it is difficult to bring the object (such as the finger) into contact with the screen from one end to the other end, which results in a problem of degraded operability. In the case that necessity to manipulate the electronic apparatus arises when the screen is browsed or used in a position distant from the electronic apparatus, inconveniently it is necessary that a user move close to the electronic apparatus so as to be able to manipulate the electronic apparatus. Because a fingerprint or a stain of a hand adheres to the screen, the contact type input function implementing method is not suitable to the user who worries about the stain of the screen. When the hand is wet or dirty, because the hand is prohibited from touching the screen, inconveniently the screen cannot be manipulated.

In the electronic apparatus having a projector function, it is conceivable that the electronic apparatus is placed still to project display contents (such as a slide show) onto the screen. When the user touches the screen in order to perform a manipulation to turn a slide (page), inconveniently the electronic apparatus placed in position is shifted to shake a video image on the screen. It is troublesome that the user who performs a presentation by the screen moves in order to manipulate the electronic apparatus.

The above troubles are generated in the contact type input function implementing method. Therefore, in the use case to which the contact type input function implementing method is not suitable, the second non-contact type input function implementing method is adopted as described in Japanese Unexamined Patent Publication No. 08-315154. Japanese Unexamined Patent Publication No. 08-315154 disclose a gesture recognition system, in which the hand is recognized by performing image processing to image data of the hand captured with the camera and a motion of the recognized hand (hand gesture) is detected. The electronic apparatus is caused to recognize various hand gestures, which allows a manipulation input to be performed to the electronic apparatus without touching the electronic apparatus.

### SUMMARY

However, when the non-contact type input function implementing method is performed by the technology of Japanese Unexamined Patent Publication No. 08-315154, the following problems are generated.

For example, it is difficult that the camera captures a subject (hand) in a dark space (outside of a room in a night time or a room in which illumination is reduced in operating a projector), and the image data in which the hand can be recognized is hardly obtained. Therefore, unfortunately the system of Japanese Unexamined Patent Publication No. 08-315154 cannot be applied to the input apparatus of the electronic apparatus that is used in the dark space. Additionally, in the system of Japanese Unexamined Patent Publication No. 08-315154, because the image captured by the camera is dealt with, it is necessary to perform image processing having a high processing load. Therefore, unfortunately high-function information processing apparatus is required, or a processing time is lengthened. In the system of Japanese Unexamined Patent Publication No. 08-315154, processing of distinguishing the image of the hand from a background image is performed in order to recognize the shape of the hand. When a texture similar to the hand is included in the background image, the shape (region) of the hand cannot correctly be extracted, and probably the gesture is mistakenly recognized.

The present invention has been devised to solve the problems described above, and an object thereof is to a gesture recognition apparatus that implements a non-contact input function in which high-speed processing and high accuracy are achieved irrespective of brightness of a service space, a gesture recognition method, a control program of the gesture recognition apparatus, and a recording medium in which the control program is recorded.

In accordance with an aspect of the present invention, a gesture recognition apparatus includes: a temperature sensor in which a plurality of infrared sensors are arranged; a change region specifying unit that specifies a change region where a temperature change is generated as a region indicating a hand based on a temperature detected by each infrared sensor of the temperature sensor; and a gesture recognition unit that specifies a movement locus of the change region specified by the change region specifying unit and recognizes a gesture of the hand.

According to the above configuration, in the gesture recognition apparatus, the information detecting the motion of the object (hand) is acquired as the temperature information with the plurality of infrared sensors. The change region specifying unit specifies the change region where the temperature change is generated as the region indicating the hand, and the gesture recognition unit specifies the movement locus of the specified change region to recognizes the gesture of the hand.

The gesture recognition apparatus can analyze the motion of the object using only the temperature information without dealing with a huge amount of image data, and can recognize the gesture. As a result, the improvement of the processing efficiency and the reduction of the processing load can be achieved in the gesture recognition apparatus. That is, the input apparatus having a high reaction speed can be constructed.

In the gesture recognition apparatus of the invention, the surface temperature of the object is acquired with the infrared sensors, and the motion of the object is detected by the difference between the temperature of the object and the environmental temperature. Accordingly, in a configuration in which the object is captured with an optical system camera to recognize the gesture, there is a limitation to the use of the configuration in a dark space. However, the gesture recognition apparatus of the invention can act as the input apparatus with no limitation in the dark space.

In the gesture recognition in which the optical system camera is used, in the case of a little difference of a texture between the object and a background, the position and the shape of the object cannot correctly be recognized, but unfortunately the false recognition of the gesture is increased. On the other hand, in the gesture recognition apparatus of the invention, the problem of the false recognition due to similarity of the texture is not generated, because the object (such as the hand) having the surface temperature different from the environmental temperature is detected based on the temperature information.

As a result, the gesture recognition apparatus of the invention has an advantage that the non-contact input function in which the high-speed processing, and the high accuracy are achieved irrespective of the brightness of the service space is implemented.

Preferably the gesture recognition apparatus further includes a gravity center determination unit that determines a gravity center of the change region specified by the change region specifying unit, wherein the gesture recognition unit specifies the movement locus by tracing a position of the gravity center.

Therefore, the movement locus of the change region can be specified by a simplified processing procedure.

Preferably the gesture recognition apparatus further includes a change amount calculator that calculates temperature change amount in each infrared sensor by comparing the temperature detected by each infrared sensor to a predetermined reference temperature, wherein the gravity center determination unit determines the gravity center of the change region based on the temperature change amount obtained in each infrared sensor.

According to the above configuration, the gravity center is not determined based only on a geometric shape of the change region, but the gravity center of the change region is obtained in consideration of the temperature change amount.

The motion of the hand can more correctly be detected by tracing the locus of the obtained gravity center, so that accuracy of the gesture recognition can be enhanced.

Preferably the gesture recognition apparatus further includes a mask storage in which a mask indicating an arrangement pattern of validity/invalidity in the plurality of infrared sensors is stored while correlated with a kind of an application of an electronic apparatus connected to the gesture recognition apparatus; and a mask selector that selects the mask, which is correlated with the application currently activated by the electronic apparatus, from the mask storage, wherein the change region specifying unit specifies the change region based only on the temperature detected by the infrared sensor that is validated by the mask selected by the mask selector.

The configuration in which the infrared sensor is selectively used can reduce the processed information amount to enhance the processing speed, and the configuration can enhance accuracy of the gesture recognition when the specific gesture is recognized.

Preferably the gesture recognition apparatus further includes a variation calculator that calculates a variation of the change region specified by the change region specifying unit, wherein the gesture recognition unit recognizes the gesture based on an increase or decrease of the variation with time elapse.

The gesture recognition unit recognizes that hands or fingers move in a direction in which the hands or fingers are opened when the variation of the change region is increased, and the gesture recognition unit recognizes that the hands or fingers move in a direction in which the hands or fingers are doused when the variation of the change region is decreased.

In accordance with another aspect of the present invention, a gesture recognition method includes the steps of: acquiring a temperature at each of a plurality of infrared sensors from a temperature sensor in which the infrared sensors are arranged; specifying a change region where a temperature change is generated as a region indicating a hand based on the temperature detected by each infrared sensor; and specifying a movement locus of the specified change region to recognize a gesture of the hand.

The gesture recognition apparatus may be constructed by a computer. In this case, a control program of the gesture recognition apparatus, which is constructed by the computer by operating the computer as each unit of the gesture recognition apparatus, and a computer-readable recording medium in which the control program is recorded are also included in the scope of the invention.

The gesture recognition apparatus of the invention includes: the temperature sensor in which the plurality of infrared sensors are arranged; the change region specifying unit that specifies the change region where the temperature change is generated as the region indicating the hand based on the temperature detected by each infrared sensor of the temperature sensor; and the gesture recognition unit that specifies the movement locus of the change region specified by the change region specifying unit and recognizes the gesture of the hand.

The gesture recognition method of the invention includes the steps of: acquiring the temperature at each of the plurality of infrared sensors from the temperature sensor in which the infrared sensors are arranged; specifying the change region where the temperature change is generated as the region indicating the hand based on the temperature detected by each infrared sensor; and specifying the movement locus of the specified change region to recognize the gesture of the hand.

Accordingly, the invention has the advantage that the non-contact input function in which the high-speed processing and the high accuracy are achieved irrespective of the brightness of the service space is implemented.

### BRIEF DESCRIPTION OF THE DRAWING

Fig. 1 is a block diagram illustrating a detailed configuration of a main part of a data processor included in a gesture recognition apparatus according to embodiments of the invention;
Fig. 2 is a view illustrating an appearance of an electronic apparatus (smartphone) provided with the gesture recognition apparatus of the first embodiment;
Fig. 3 is an exploded perspective view illustrating a sensor unit incorporated in the electronic apparatus;
Fig. 4 is a view illustrating an example of an arrangement of infrared detecting elements in a temperature sensor chip of the sensor unit;
Fig. 5 is a block diagram illustrating a configuration of a main part of the gesture recognition apparatus of the first embodiment;
Fig. 6 is a view schematically illustrating a data structure of temperature information after a coordinate disposing unit of the gesture recognition apparatus plots a temperature from each sensor in an XY-coordinate system;
Fig. 7 is a view illustrating a specific example of the temperature information plotted in the XY-coordinate system;
Fig. 8 is a view illustrating a positional relationship between the smartphone and a hand in each detection time and a relationship between the hand and the temperature information detected and acquired in the detection time;
Fig. 9 is a view illustrating specific examples of information generated by a change amount calculator of the gesture recognition apparatus and information generated by a gravity center determination unit in a period of times T₁ to T₃ illustrated in Fig. 8;
Fig. 10 is a view illustrating a specific example of a result in which a gesture recognition unit of the gesture recognition apparatus specifies a movement locus of a gravity center;
Fig. 11 is a view illustrating a positional relationship between the smartphone and the hand in each detection time and a relationship between the hand and the temperature information detected and acquired in the detection time;
Fig. 12 is a view illustrating an example of a gesture pattern stored in a gesture pattern storage of the gesture recognition apparatus;
Fig. 13 is a flowchart illustrating a flow of gesture recognition processing performed by each unit of the data processor included in the gesture recognition apparatus;
Fig. 14 is a flowchart illustrating a detailed flow of the gesture recognition processing performed by the gesture recognition unit of the gesture recognition apparatus;
Fig. 15 is a view illustrating a specific example of a mask stored in a mask storage of the gesture recognition apparatus;
Fig. 16 is a view illustrating an example of the data structure of the mask stored in the mask storage of the gesture recognition apparatus;
Fig. 17 is a view schematically illustrating a data structure of temperature information after a coordinate disposing unit of a gesture recognition apparatus according to a second embodiment of the invention plots a temperature from each sensor in the XY-coordinate system;
Fig. 18 is a view illustrating a positional relationship between hands in each detection time and a relationship among the hands, the temperature information, and a change region, which are acquired in the detection time;
Fig. 19 is a view illustrating specific examples of pieces of information generated by a change amount calculator of the gesture recognition apparatus, pieces of information generated by the gravity center determination unit, and pieces of information generated by a variation calculator in times T₁ and T₂ illustrated in Fig. 18.
Fig. 20 is a view illustrating an example of a gesture pattern stored in the gesture pattern storage of the gesture recognition apparatus of the second embodiment; and
Fig. 21 is a flowchart illustrating a detailed flow of the gesture recognition processing performed by the gesture recognition unit of the gesture recognition apparatus of the second embodiment.

### DETAILED DESCRIPTION

### First Embodiment

Hereinafter, preferred embodiments of the present invention will be described with reference to the drawings. In the following embodiments, by way of example, a gesture recognition apparatus of the invention is mounted on a smartphone, and the gesture recognition apparatus implements an input function of the smartphone. In addition to the smartphone, the gesture recognition apparatus of the invention can be mounted on various pieces of electronic apparatus such as a mobile phone, a PDA, a portable game machine, an electronic dictionary, an electronic databook, a digital camera, a digital video camera, a personal computer, a notebook-size personal computer, a television set, a video player, and a home-use game machine, and the gesture recognition apparatus can exert the input functions of the pieces of electronic apparatus.

### [Configuration of Gesture Recognition Apparatus]

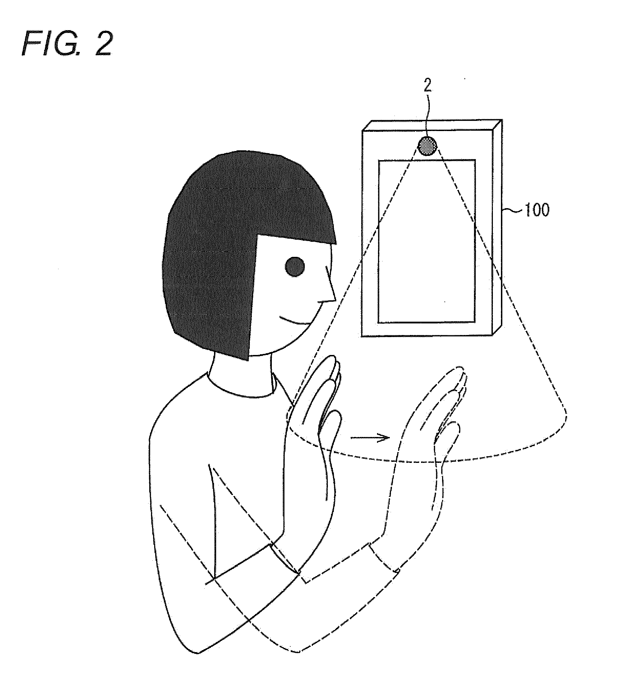

Fig. 2 is a view illustrating an appearance of a gesture recognition apparatus according to a first embodiment of the invention. As illustrated in Fig. 2, the gesture recognition apparatus of the first embodiment, includes a sensor unit 2, and is incorporated in a smartphone 100.

The sensor unit 2 senses a temperature of an object existing in a detectable range (for example, existing in a broken-line frame of Fig. 2).

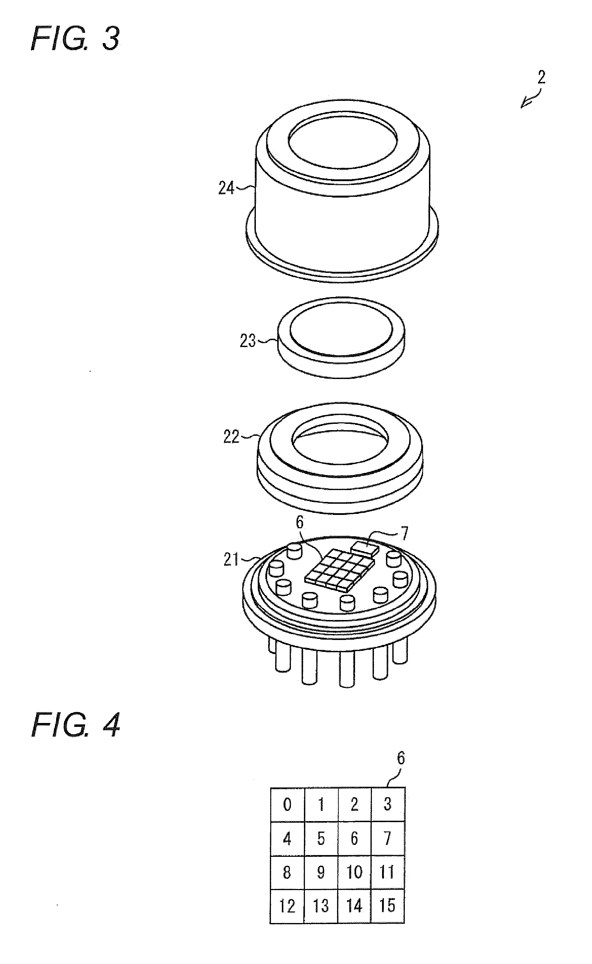

Fig. 3 is an exploded perspective view illustrating the sensor unit 2 incorporated in the electronic apparatus 100. The sensor unit 2 is configured as illustrated in Fig. 3. Specifically, a temperature sensor chip 6 and a signal processor 7 are mounted on a board 21, and an inner case 22 is provided above the temperature sensor chip 6 and the signal processor 7 such that a lens 23 is fixed while the temperature sensor chip 6 and the signal processor 7 are protected. The lens 23 is mounted on the inner case 22, and an outer case 24 is provided such that the inner case 22 and the lens 23 are covered therewith.

In the temperature sensor chip 6, a plurality of infrared detecting elements (infrared sensors) are arranged on a surface. Each infrared sensor detects temperature information on a detection object based on a temperature rise that is generated by receiving an infrared ray.

Fig. 4 is a view illustrating an example of an arrangement of the infrared detecting elements in the temperature sensor chip 6. For example, as illustrated in FIG. 4, the temperature sensor chip 6 includes the infrared sensors that are formed into a 4-by-4 arrangement. Addresses 0 to 15 are allocated to the sensors, respectively, and a positional relationship between the sensors can be recognized on the surface by the address.

A surface temperature of the detection object existing in the detectable range can two-dimensionally be acquired by disposing the plurality of sensors, each of which is managed by the address, on the surface. For example, when a user's hand moves in the detectable range as illustrated in Fig. 2, the movement of the hand can be detected by a difference in position of the sensor that detects the surface temperature of the hand.

A functional configuration of the gesture recognition apparatus that performs gesture recognition processing using the temperature information acquired from the temperature sensor chip 6 will be described below.

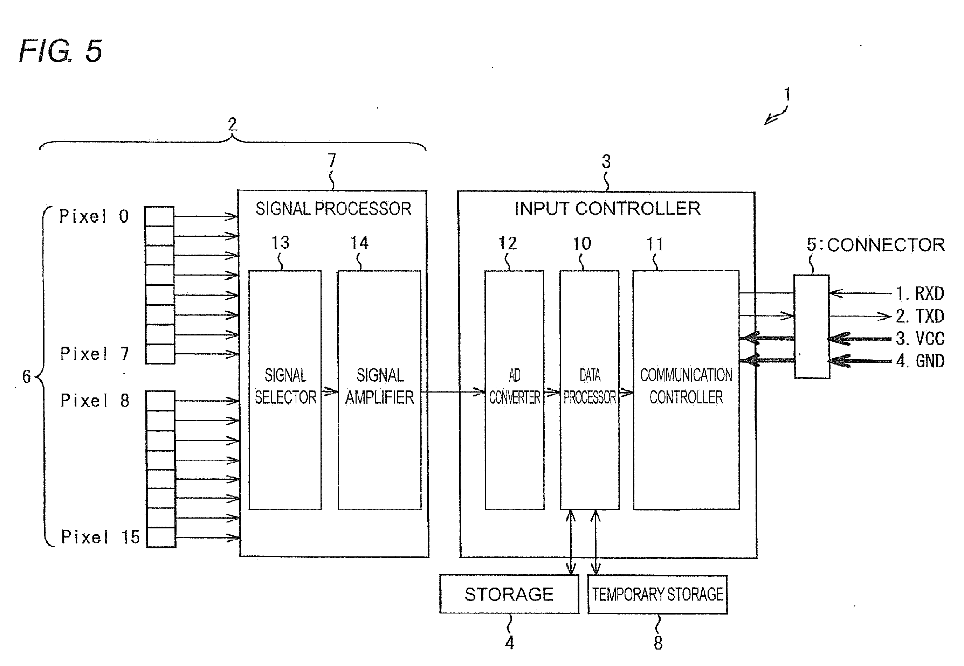

Fig. 5 is a block diagram illustrating a configuration of a main part of a gesture recognition apparatus 1 of the first embodiment. As illustrated in Fig. 5, the gesture recognition apparatus 1 includes the sensor unit 2 that includes the temperature sensor chip 6 and the signal processor 7, an input controller 3 that wholly controls the units including the sensor unit 2, a storage 4, a temporary storage 8, and a connector 5.

The signal processor 7 acquires an infrared signal that is taken from the infrared ray received by each sensor of the temperature sensor chip 6, and performs signal amplifying processing. For example, the signal processor 7 is constructed by an ASIC (Application Specific Integrated Circuit).

In the first embodiment, the signal processor 7 includes a signal selector 13 and a signal amplifier 14. The signal selector 13 selectively acquires the infrared signal from the temperature sensor chip 6. Specifically, the signal selector 13 can selectively acquire the infrared signal from the infrared sensor having the specific address under the control of the input controller 3.

The signal amplifier 14 amplifies the infrared signal acquired by the signal selector 13 such that the input controller 3 can perform digital processing, and supplies the amplified infrared signal to the input controller 3.

The infrared signal, which is acquired and processed by the signal processor 7, is digitized by the input controller 3 and used as the temperature information.

The input controller 3 wholly controls operations of the units of the gesture recognition apparatus 1 and constructed by a microcomputer. Alternatively, a main controller of the main body of the smartphone 100 may have the function of the input controller 3. In this case, the smartphone 100 acts as the gesture recognition apparatus 1 of the present invention.

The input controller 3 includes an AD converter 12 that converts the analog infrared signal supplied from the signal processor 7 into the digital signal, a communication controller 11 that conducts communication with the main controller of the smartphone 100 through the connector 5, and a data processor 10 that performs the gesture recognition processing using the digitized temperature information. A configuration and an operation of the data processor 10 that is of a functional block are described later.

The connector 5 electrically and communicably connects the gesture recognition apparatus 1 and the main controller of the smartphone 100. A result that the data processor 10 recognizes a gesture is supplied to the main controller of the smartphone 100 through the communication controller 11 and the connector 5. On the other hand, information on a state of the smartphone 100, such as which application is currently activated, is supplied from the main controller of the smartphone 100.

The temporary storage 8 is what is called a working memory in which data used in a calculation and a calculation result are temporarily stored during a procedure of each piece of processing performed by the gesture recognition apparatus 1.

The storage 4 is as follows: (1) a control program performed by the input controller 3, (2) an OS program performed by the input controller 3, (3) an application program for the input controller 3 to perform each function possessed by the gesture recognition apparatus 1, and (4) for storing each piece of data read when the input controller 3 performs the application program. Particularly, various programs and various pieces of data, which are read when the gesture recognition apparatus 1 performs the gesture recognition processing, are stored in the storage 4.

In the gesture recognition apparatus 1, the data processor 10 of the input controller 3 recognizes motion of the object (such as the user's hand) as the gesture based on the temperature information acquired from the temperature sensor chip 6, and the communication controller 11 supplies to the smartphone 100 the recognition result as an input to the smartphone 100. Therefore, the smartphone 100 can perform an operation allocated to the recognized gesture.

That is, the gesture recognition apparatus 1 can act as a non-contact input device of the smartphone 100.

### [Configuration of Data Processor]

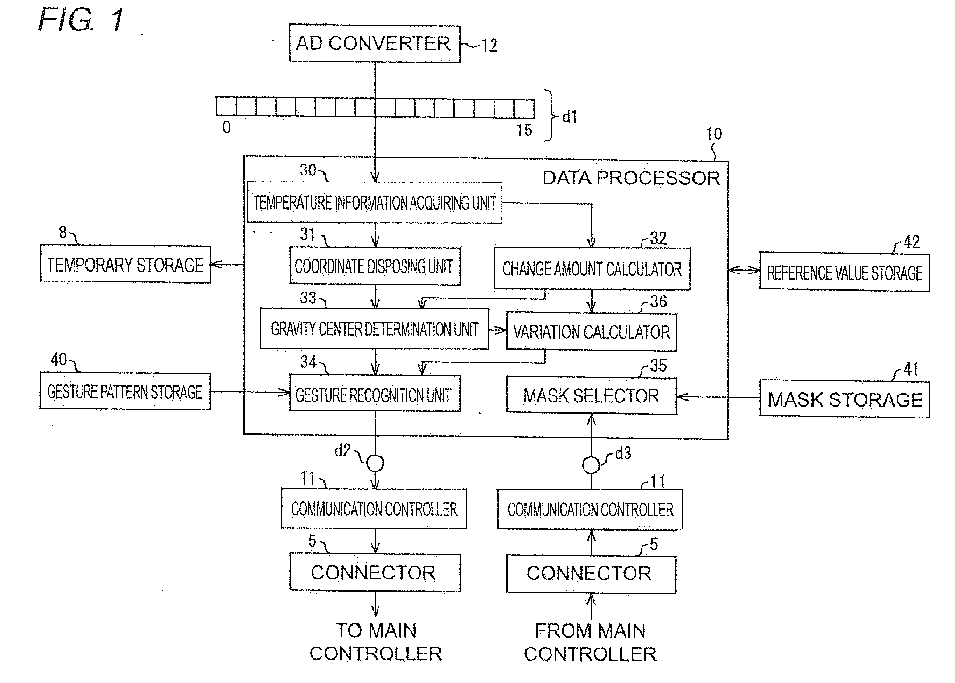

Fig. 1 is a block diagram illustrating a detailed configuration of a main part of the data processor 10 of the gesture recognition apparatus 1

The data processor 10 includes a temperature information acquiring unit 30, a coordinate disposing unit 31, a change amount calculator 32, and a gesture recognition unit 34 as the functional blocks. Preferably the data processor 10 includes a gravity center determination unit 33. The data processor 10 may further include a mask selector 35 and a variation calculator 36.

The storage 4 includes at least a gesture pattern storage 40 in which a pattern of the gesture that should be identified by the data processor 10 is stored. The storage 4 may further include a mask storage 41 and a reference value storage 42.

Each functional block of the data processor 10 can be implemented such that a central processing unit such as a MPU (Micro Processing Unit) and a CPU (Central Processing Unit) reads a program stored in a storage (storage 4) constructed by a ROM (Read Only Memory) or an NVRAM (Non-Volatile Random Access Memory) on a RAM (Random Access Memory) (temporary storage 8) and executes the program.

The temperature information acquiring unit 30 acquires digitally-converted temperature information d1 from the AD converter 12. In the first embodiment, the temperature information d1 has a data structure in which the addresses 0 to 15 of the sensors correspond to the temperatures detected by the sensors. In the first embodiment, the temperature information acquiring unit 30 acquires the temperature information d1, which is detected in real time by the sensors of the temperature sensor chip 6, at constant time intervals (for example, every 0.5 second) and stores the temperature information d1 in the temporary storage 8 as needed. At this point, the temperature information acquiring unit 30 correlates timing information Tᵢ (i = 0, 1, 2, ..., n) identifying the detected time with the acquired temperature information d1.

The coordinate disposing unit 31 plots the pieces of temperature information acquired from the sensors in a two-dimensional coordinate such that the pieces of temperature information correspond to the arrangement of the sensors. In the first embodiment, the pieces of temperature information acquired from the sensors are plotted in an XY-coordinate system so as to correspond to the arrangement of (4 × 4 =) 16 sensors having the addresses 0 to 15.

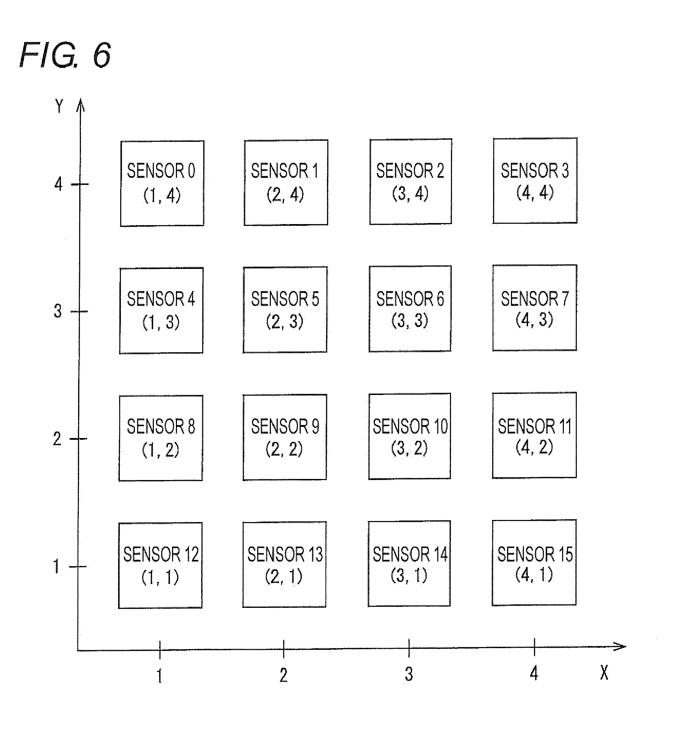

Fig. 6 is a view schematically illustrating the data structure of the temperature information after the coordinate disposing unit 31 plots the temperatures from the sensors in an XY-coordinate system.

For example, as illustrated in Fig. 4, when the 16 infrared sensors having the addresses 0 to 15 are formed into the 4-by-4 arrangement in the temperature sensor chip 6, the coordinate disposing unit 31 plots the temperatures of the sensors with a left lower end of the temperature sensor chip 6 as an origin and with a left lower end of the XY-coordinate system as an origin.

Specifically, the temperature detected by the sensor having the address 12 is plotted in a position of (X,Y) = (1,1), and the temperature detected by the adjacent sensor having the address 13 is plotted in a position of (X,Y) = (2,1), For other sensors, similarly the coordinate disposing unit 31 plots the temperature in the XY-coordinate system such that the temperatures correspond to the actual arrangement of the sensors. Finally, the temperature at the upper right sensor having the address 3 is plotted in the position of (X,Y) = (4,4).

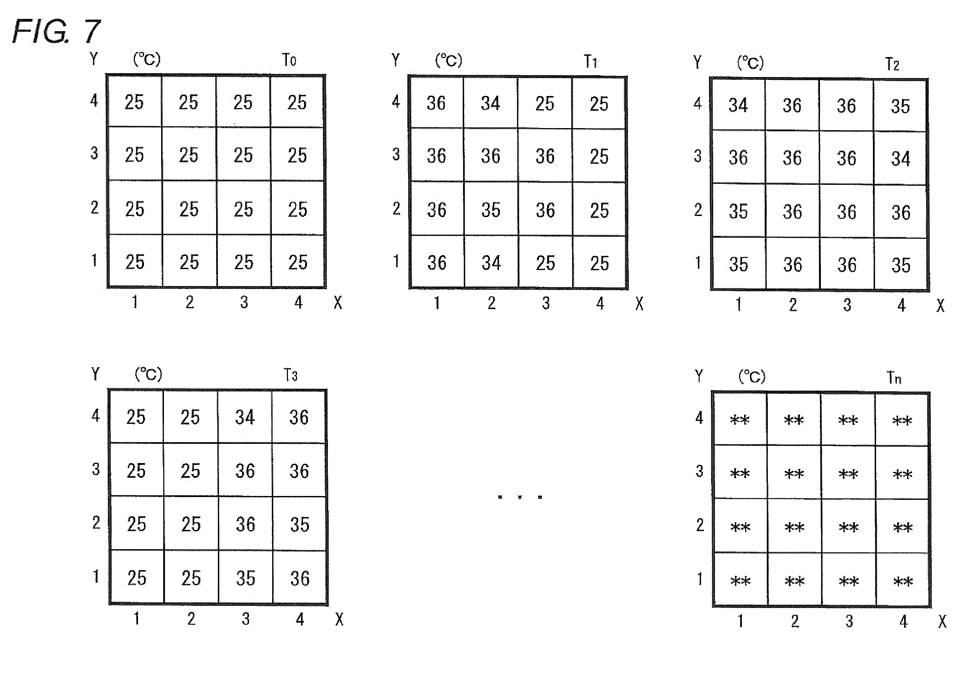

The pieces of temperature information plotted in the XY-coordinate system are stored in the temporary storage 8 while correlated with the timing information Tᵢ. Fig. 7 is a view illustrating a specific example of the pieces of temperature information plotted in the XY-coordinate system. Fig. 7 illustrates examples in which the XY-coordinate system is produced for each of the pieces of temperature information acquired from a time T₀ to Tₙ. A double-digit value stored in each of 16 cells of the XY-coordinate system indicates the temperature detected by each sensor (in this case, a unit is degree Celsius (°C)).

The change amount calculator 32 compares a predetermined threshold to the actual temperature acquired from each sensor to determine the existence or non-existence of a temperature change or the detection object (such as a hand and a finger). The change amount calculator 32 also compares a predetermined reference value to the actual temperature to calculate the amount of change in temperature detected by each sensor.

The change amount calculator 32 compares the predetermined threshold to the temperature at each sensor to determine whether each sensor detects the temperature at the object. For example, when a human's hand is detected as the detection object, a lower limit (in some cases, an upper limit) that is assumed to be a body temperature of the human is set to the threshold. At this point, it is assumed that the threshold is set to 33°C.

The change amount calculator 32 compares the temperature at each sensor to the threshold of 33°C, and recognizes the sensor that detects the temperature of 33°C or more as the sensor that detects the hand. That is, when the position of the sensor that detects the hand is recognized, the position of the sensor that detects the hand can be dealt with as the position in which the hand exists.

In consideration of a character of the target detection object, the threshold may properly be set to the temperature at which the object is effectively specified. The set threshold is previously stored in the reference value storage 42, and read by the change amount calculator 32 as needed.

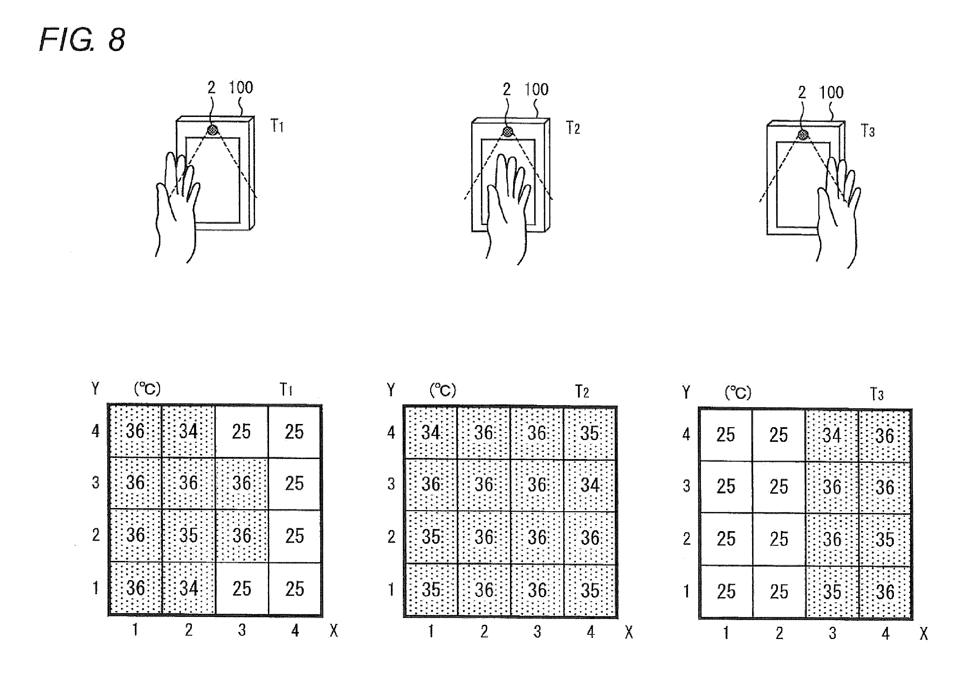

Fig. 8 is a view illustrating a positional relationship between the smartphone 100 and the hand in each detection time and a relationship between the hand and the temperature information detected and acquired in the detection time. As illustrated in Fig. 8, in the time T₁, it is assumed that the hand is located at a left end in the detection range of the sensor unit 2. At this point, the coordinate disposing unit 31 generates the XY-coordinate system of Fig. 8 with which the time T₁ is correlated. The change amount calculator 32 compares the temperature stored in each coordinate position of the XY-coordinate system to the threshold of 33°C to specify the coordinate position of the temperature of the threshold or more, and specifies the coordinate position as a region of the hand. In the example illustrated in Fig. 8, similarly to the actual position of the hand, the change amount calculator 32 also specifies the region at the left end (halftone region) as the region of the hand in the XY-coordinate system. In the time T₂, it is assumed that the hand moves to the front surface of the smartphone 100 (sensor unit 2). At this point, the coordinate disposing unit 31 generates the XY-coordinate system with which the time T₂ is correlated (Fig. 8). The change amount calculator 32 specifies the whole surface (halftone region) of the XY-coordinate system as the region of the hand. In the time T₃, it is assumed that the hand further moves to the right end in the detection range. At this point, the coordinate disposing unit 31 generates the XY-coordinate system of Fig. 8 with which the time T₃ is correlated. The change amount calculator 32 specifies the right-end region (halftone region) having the threshold of 33°C or more.

The change amount calculator 32 calculates a difference between the actually-detected temperature and the reference value as a change amount ΔT. The change amount calculator 32 calculates the change amount ΔT(X,Y) for the temperature of each address (coordinate position).

The reference value may be identical to the threshold that is used to detect the object, or a proper value may be fixed in consideration of an environmental temperature in which no object exists. In the first embodiment, because the environmental temperature of the smartphone 100 is set to 25°C, it is assumed that the reference value is previously fixed to 25°C. The prescribed reference value is stored in the reference value storage 42, and read by the change amount calculator 32 as needed.

The reference value may dynamically be updated. For example, the temperature is measured with the temperature sensor chip 6 as needed, and it is assumed that a given time elapses while the change amount does not largely vary. At this point, an average value calculator (not illustrated) of the data processor 10 calculates an average value of the temperatures measured in the period, and the average value may be stored as the reference value in the reference value storage 42.

The change amount calculator 32 sums all the change amounts ΔT(X,Y) obtained in each address of the cell, and obtains a sum (hereinafter referred to as a SUM) of the change amounts ΔT(X,Y) of the XY-coordinate system in the time Tᵢ. Specifically, in the first embodiment, the change amount calculator 32 performs the calculation using an equation of SUM = ΔT(1,1) +AT(1,2) + ΔT(1,3) + ΔT(1,4) + ΔT(2,1) + ΔT(2,2) + ΔT(2,3) + ΔT(2,4) + ΔT(3,1) + ΔT(3,2) + ΔT(3,3) + ΔT(3,4) + ΔT(4,1) + ΔT(4,2) + ΔT(4,3) + ΔT(4,4).

Therefore, the total change amount (SUM) generated in the detection range (in the broken-line frame of Fig. 2) becomes clear at the time Tᵢ.

The change amount calculator 32 plots the change amount ΔT(X,Y) obtained in each address of the cell and the sum SUM of the change amounts ΔT(X,Y) in the XY-coordinate system while the change amount ΔT(X,Y) and the sum SUM are correlated with the time Tᵢ, temporarily stores the change amount ΔT(X,Y) and the sum SUM in the storage 8.

When and where the temperature change is found can be recognized by referring to the change amount ΔT obtained by the change amount calculator 32. The change amount ΔT and the sum SUM are read and used by each functional block in order to determine the existence or non-existence of the gesture recognition object or the coordinate position (Gx, Gy) of the gravity center in the region (region having the large change amount) of the object.

Preferably, based on the temperature information acquired from each sensor, the change amount calculator 32 determines which period from a certain time to another time is recognized as a user's manipulation period (period in which the user intentionally moves the hand to perform the input to the smartphone 100).

Some methods for determining the period in which the user performs the manipulation will specifically be described below.

A first method is one in which the threshold stored in the reference value storage 42 is used. The change amount calculator 32 determines that the change is generated (the manipulation is started) when each temperature plotted in the XY-coordinate system in a certain time is compared to the threshold (for example, 33°C) to specify at least the two sensors that detect the temperature of 33°C or more. The period in which at least the two sensors that detect the temperature of 33°C or more exists can be determined as the manipulation period.

A second method is one in which the total change amount SUM of the XY-coordinate system obtained in each detection time and the reference value stored in the reference value storage 42 are used. The change amount calculator 32 fixes (35°C - Ta°C) x 2 as the threshold of the change amount when the reference value is set to Ta°C, and the change amount calculator 32 determines that the change is generated (the manipulation is started) when the SUM is not lower than (35°C - Ta°C) x 2. The period in which the SUM is not lower than (35°C - Ta°C) x 2 can be determined as the manipulation period.

According to the above configuration, the gesture recognition processing can be performed while limiting only to the temperature information in the period that is determined to be the manipulation period by the change amount calculator 32, and improvement of processing efficiency of the gesture recognition apparatus 1 and reduction of a processing load can be achieved by decreasing a processed information amount.

Based on the change amount ΔT of each sensor and the SUM, the gravity center determination unit 33 determines the gravity center of the region where the change is recognized in the XY-coordinate system, specifically, the change region (halftone region of Fig. 8) where the temperature rise is generated by the detection of the hand. The gravity center determination unit 33 determines a coordinate (Gx, Gy) of a gravity center G in the change region according to the following procedure while referring to the change amount AT and the SUM.

The gravity center determination unit 33 obtains an X-coordinate (Gx) of the gravity center G. A coefficient corresponding to the X-coordinate in each coordinate position is multiplied by the change amount ΔT in each coordinate position, the products are summed, and the sum is divided by the SUM, thereby calculating the X-coordinate (Gx). Specifically, the gravity center determination unit 33 performs the calculation using an equation of Gx = {(ΔT(1,1) + ΔT(1,2) + ΔT(1,3) +ΔT(1,4)) x 1 + (ΔT(2,1) + ΔT(2,2) + ΔT(2,3) + ΔT(2_{.}4)) x 2 + (ΔT(3,1) + ΔT(3,2) + ΔT(3,3) + ΔT(3,4)) x 3 + (ΔT(4,1) + ΔT(4,2) + ΔT(4,3) + ΔT(4,4)) x 4} /SUM.

The gravity center determination unit 33 obtains a Y-coordinate (Gy) of the gravity center G. A coefficient corresponding to the Y-coordinate in each coordinate position is multiplied by the change amount ΔT in each coordinate position, the products are summed, and the sum is divided by the SUM, thereby calculating the Y-coordinate (Gy). Specifically, the gravity center determination unit 33 performs the calculation using an equation of Gy = {(ΔT(1,1) +ΔT(2,1) + ΔT(3,1) + ΔT(4,1)) x + (ΔT(1,2) + ΔT(2,2) + ΔT(3,2) + ΔT(4,2)) x 2 +(ΔT(1,3) + ΔT(2,3) + ΔT(3,3) + ΔT(4,3)) x 3 + (ΔT(1,4) + ΔT(2,4) + ΔT(3,4) + ΔT(4,4)) x 4} /SUM.

The gravity center determination unit 33 stores the coordinate (Gx, Gy) of the gravity center G in the change region in the obtained time Tᵢ in the temporary storage 8 while the coordinate (Gx, Gy) is correlated with the time Tᵢ. The gravity center determination unit 33 may plot the gravity center G(Gx, Gy) in the XY-coordinate system generated by the coordinate disposing unit 31.

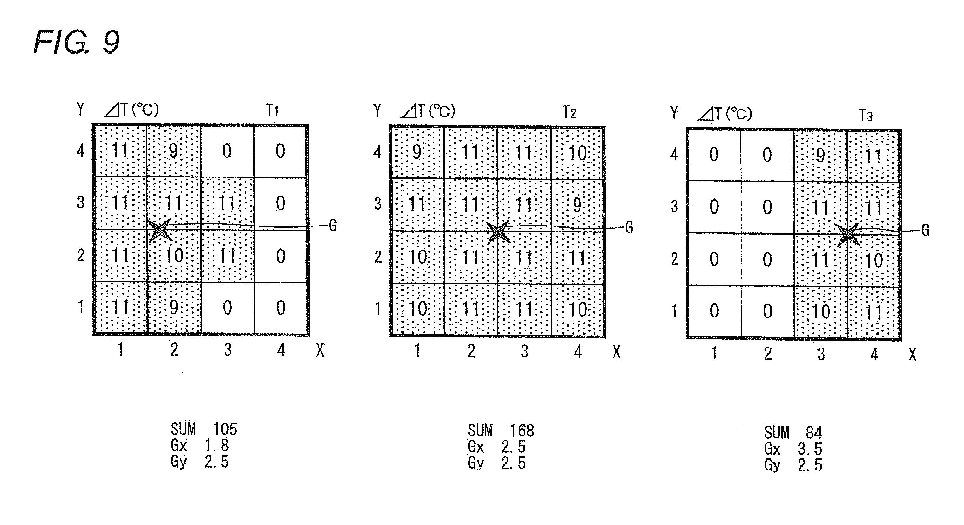

Fig. 9 is a view illustrating specific examples of the information generated by the change amount calculator 32 and the information generated by the gravity center determination unit 33 in the period of the times T₁ to T₃ illustrated in Fig. 8.

The change amount calculator 32 acquires the temperature information (XY-coordinate system T₁ of Fig. 8) in the time T₁, calculates the difference between the temperature at each sensor and the reference value of 25°C, and plots the change amount ΔT of each sensor. The result of the plot is illustrated in the XY-coordinate system T₁ of Fig. 9. Similarly XY-coordinate systems T₂ and T₃ of Fig. 9 illustrate the results in which the change amounts ΔT are obtained from the pieces of temperature information on the times T₂ and T₃ of Fig. 8, respectively.

The change amount calculator 32 calculates the total change amount SUM in the time T₁ as "105" based on the XY-coordinate system T₁ of Fig. 9. Similarly the change amount calculator 32 calculates the total change amount SUM in the time T₂ as "168", and calculates the total change amount SUM in the time T₃ as "84".

Then the gravity center determination unit 33 determines the gravity center G in the change region (halftone region of Fig. 8) using the change amount ΔT of each sensor and the SUM. In the example illustrated in Fig. 9, the gravity center determination unit 33 determines the coordinate (Gx, Gy) of the gravity center G in the time T₁ as (1.8, 2.5), determines the coordinate (Gx, Gy) of the gravity center G in the time T₂ as (2.5, 2.5), and determines the coordinate (Gx, Gy) of the gravity center G in the time T₃ as (3.5, 2.5).

When and how the object (hand) moves can be recognized in the subsequent process when the position of the gravity center G is traced.

As described above, the coordinate of the gravity center G in the change region is specified in each detection time, which allows the movement locus of the change region (hand) to be obtained with a small calculation amount. Therefore, preferably the method for determining the configuration and the gravity center of the gravity center determination unit 33 is adopted from the viewpoints of the improvement of the processing efficiency and the reduction of the processing load.

It is necessary to trace the movement locus of the hand in order to recognize the gesture of the object (hand). However, the method for determining the gravity center to trace the gravity center is described as the movement locus tracing method only by way of example, and the configuration of the invention is not limited to the method for determining the gravity center to trace the gravity center.

The gesture recognition unit 34 traces the position of the object, and recognizes the motion of the object as the gesture according to the movement locus of the object. Specifically, in the first embodiment, the position of the gravity center of the object, which is determined by the gravity center determination unit 33, is traced to specify the locus of the gravity center, and the gesture of the object is recognized according to the specified locus of the gravity center.

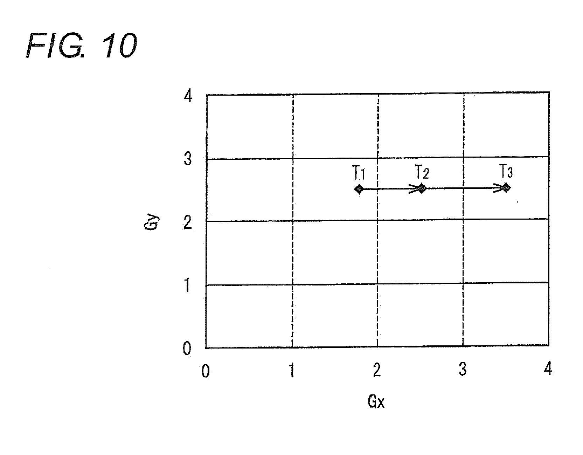

Fig. 10 is a view illustrating a specific example of a result in which the gesture recognition unit 34 specifies the locus of the gravity center. By way of example, the locus of the gravity center is specifically illustrated in Fig. 10 in order to explain the locus specified by the gesture recognition unit 34, but actually the locus is not visually presented to the user.

As illustrated in Fig. 10, the movement locus of the gravity center becomes clear when the gravity centers in the times T₁ to T₃ of Fig. 9 are plotted in one coordinate system.

The gesture recognition unit 34 traces the gravity center and recognizes the motion of the gravity center from a start time Tₛ in the manipulation period to an end time Tₑ in the manipulation period through T₁, T₂, T₃, .... In the example illustrated in Fig. 10, the gravity center moves from the left to the right from the position in the time T₁ to the position in the time T₃. Accordingly, the gesture recognition unit 34 can recognize that the gesture of "move from left to right" is performed. The gesture recognition unit 34 can recognize various gestures such as "move from right to left", "move from top to bottom", "move from bottom to top", "move clockwise", and "move counterclockwise" according to the locus of the gravity center.

According to the gesture recognition apparatus 1 of the invention, the gesture recognition unit 34 can detect not only the motion in the X-axis direction and the motion in the Y-axis direction but also motion in a Z-axis direction, and identify the motion in the Z-axis direction as the gesture.

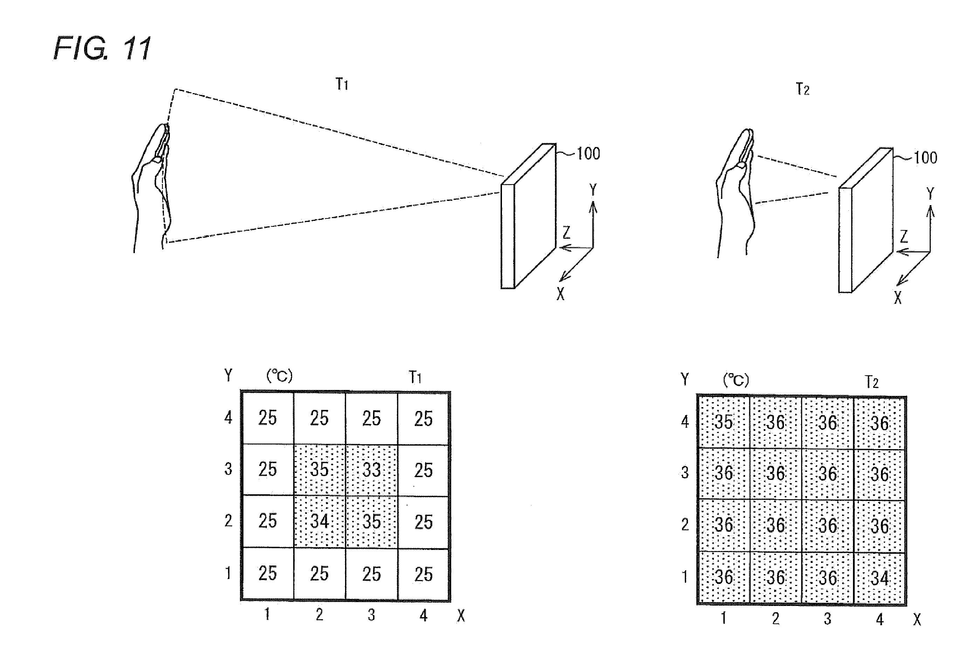

Fig. 11 is a view illustrating a positional relationship between the smartphone 100 and the hand in each detection time and a relationship between the hand and the temperature information detected and acquired in the detection time. As illustrated in Fig. 11, in the time T₁, it is assumed that the hand is located in the farthest position in the detection range of the sensor unit 2. At this point, the coordinate disposing unit 31 generates the XY-coordinate system of Fig. 11 with which the time T₁ is correlated. Because the hand is located far away from the sensor unit 2 of the smartphone 100 on the Z-axis, the hand is captured small in the surface of the temperature sensor chip 6 of the sensor unit 2. Therefore, the change region (halftone region) is specified in not the whole surface of the temperature sensor chip 6 but the local surface.

On the other hand, in the time T₂, it is assumed that the hand is located closer to the smartphone 100 compared with the time T₁. At this point, the coordinate disposing unit 31 generates the XY-coordinate system of Fig. 11 with which the time T₂ is correlated. Because the hand is located closer to the sensor unit 2 of the smartphone 100 on the Z-axis, the hand is captured large in the surface of the temperature sensor chip 6. In the example illustrated in Fig. 11, the hand is captured large in the whole surface of the temperature sensor chip 6. Therefore, the change region is specified in the whole surface of the temperature sensor chip 6.

The object is located closer to the smartphone 100 with increasing area of the change region (with increasing number of sensors that detect at least the threshold of 33°C), and the object is located farther away from the smartphone, 100 with decreasing area of the change region (with decreasing number of sensors that detect the threshold of 33°C or more).

Accordingly, the gesture recognition unit 34 traces the motion in the Z-axis direction of the object to identify the gesture according to the increase or decrease in area of the change region that varies in each detection time. Specifically the gesture recognition unit 34 can identify various gestures such as "move hand close to apparatus" and "move hand away from apparatus" according to the increase or decrease in area of the change region.

In the first embodiment, the storage 4 includes the gesture pattern storage 40, and the some patterns of the predetermined gestures are previously stored in the gesture pattern storage 40. The gesture recognition unit 34 determines which gesture pattern stored in the gesture pattern storage 40 is matched with the locus of the gravity center or the increase or decrease of the change region, thereby identifying the gesture.

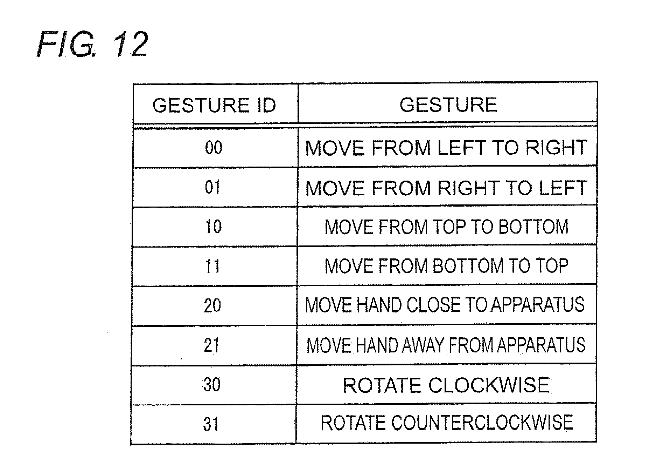

Fig. 12 is a view illustrating an example of the gesture pattern stored in the gesture pattern storage 40.

As illustrated in Fig. 12, some gesture patterns that can be recognized by the gesture recognition unit 34 are stored in the gesture pattern storage 40. In the first embodiment, in order to identify the gestures, a gesture ID is stored while correlated with each gesture pattern.

For example, when recognizing that the gesture of the object is "move from left to right" according to the locus of the gravity center illustrated in Fig. 10, the gesture recognition unit 34 outputs a gesture ID "00" indicating the gesture of "move left to right" as a recognition result d2 to the communication controller 11 (see Fig. 1).

The recognition result d2 is input to the main body (main controller) of the smartphone 100 through the connector 5. The main controller of the smartphone 100 performs the operation allocated to the gesture ID "00" in response to the input of the gesture ID "00".

The gesture pattern is illustrated in Fig. 12 only by way of example, but the invention is not limited to the gesture pattern of Fig. 12. The gesture recognition unit 34 of the invention may recognize various patterns (such as motion in an oblique direction) of the motion of the object as gestures except the gestures illustrated in Fig. 12.

### [Flow of Gesture Recognition Processing]

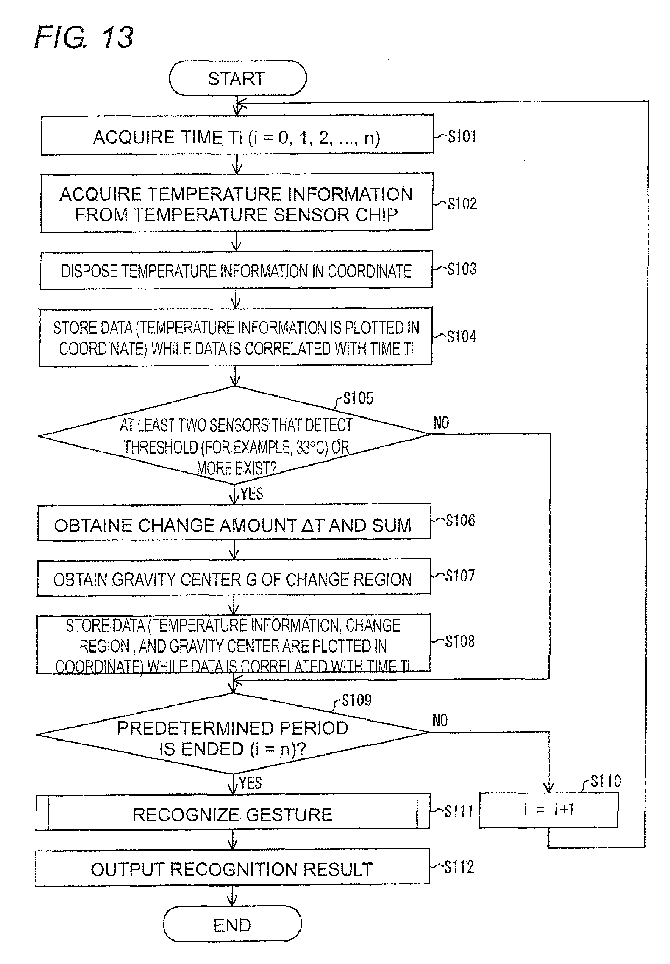

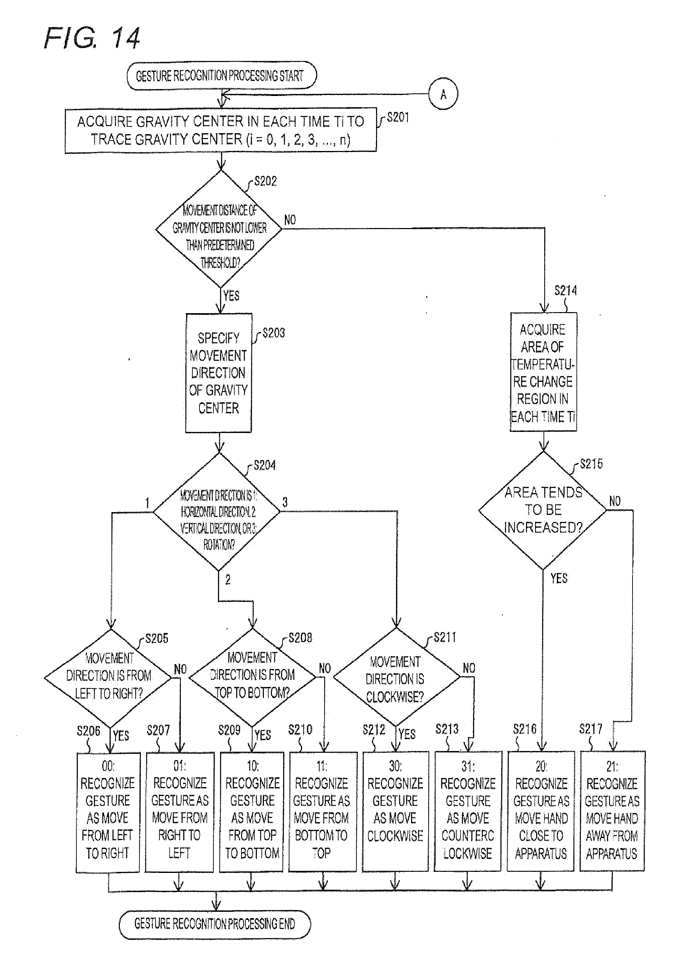

Fig. 13 is a flowchart illustrating a flow of the gesture recognition processing performed by each unit of the data processor 10 included in the gesture recognition apparatus 1 of the invention. Fig. 14 is a flowchart illustrating the detailed flow of the gesture recognition processing performed by the gesture recognition unit 34.

In the first embodiment, the sensor unit 2 detects the temperature information on the object in the predetermined detection time T₀, T₁, T₂, ..., Tₙ) during the predetermined period, and supplies the temperature information to the data processor 10 as needed.

In the predetermined detection time, the temperature information acquiring unit 30 acquires the detection time Tᵢ (S101). The temperature information d1 correlated with the acquired detection time Tᵢ is acquired from the temperature sensor chip 6 (S102). The coordinate disposing unit 31 plots the temperature at each sensor included in the acquired temperature information d1 in the XY-coordinate system corresponding to the arrangement of the sensors (S103). The coordinate disposing unit 31 stores the data generated in S103 in the temporary storage 8 while the data is correlated with the acquired detection time Tᵢ (S104).

The change amount calculator 32 compares the threshold (for example, 33°C) to the temperature plotted in each coordinate position of the XY-coordinate system, and determines whether at least the two sensors detect the temperature of 33°C or more (S105). When at least the two sensors detect the temperature of 33°C or more (YES in S105), the change amount calculator 32 determines that the object (hand) exists in the detection range in the detection time Tᵢ and that the detection time Tᵢ is included in the period in which the user performs the manipulation. The change amount calculator 32 calculates the change amount ΔT of the temperature in each coordinate position, and sums the change amounts ΔT in all the coordinate positions to calculate the SUM (S106). Based on the change amount ΔT and the SUM, the gravity center determination unit 33 determines the coordinate (Gx, Gy) of the gravity center G in the region of the sensor that detects the temperature of the hand, namely, the change region (S107).

The gravity center determination unit 33 plots the determined gravity center in the XY-coordinate system stored in S104, the change amount calculator 32 plots the change amount ΔT and the change region in the XY-coordinate system, and stores the change amount ΔT and the change region in the temporary storage 8 while the change amount AT and the change region are correlated with the SUM (S108).

On the other hand, when at least the two sensors do not detect the temperature of 33°C or more (NO in S105), the change amount calculator 32 determines that the object (hand) does not exist in the detection range in the detection time Tᵢ and that the user does not performs the input manipulation in the detection time Tᵢ. The pieces of processing in S106 to S108 are omitted.

When the predetermined period in which the gesture recognition is performed is not ended yet, namely, when the temperature information d1 that is not processed is supplied from the sensor unit 2 (NO in S109), the data processor 10 increments the detection time Tᵢ by one (S110), and the pieces of processing in S102 to S108 are repeated for the temperature information d1 in the next detection time.

When the detection time Tᵢ reaches Tₙ to complete the processing for all the supplied pieces of temperature information (YES in S109), the gesture recognition unit 34 recognizes the gesture corresponding to the detected motion of the hand based on the data stored in the temporary storage 8 (S111). Specifically, the gesture recognition unit 34 traces the gravity center position in the predetermined period (T₀ to Tₙ) or specifies the corresponding gesture from the gesture patterns stored in the gesture pattern storage 40 according to the increase or decrease in area of the change region.

The gesture recognition unit 34 outputs the gestu re ID indicating the specified gesture as the recognition result d2 to the communication controller 11 (S112).

The detailed flow of the gesture recognition processing performed in S111 by the gesture recognition unit 34 will be described below with reference to Fig. 14.

The gesture recognition unit 34 acquires the movement locus of the gravity center of the hand based on the gravity center coordinate (Gx, Gy) determined in each detection time Tᵢ (S201).

When the movement distance of the gravity center is sufficiently long (YES in S202), the gesture recognition unit 34 determines that the hand moves in the X-axis direction or the Y-axis direction, and specifies the movement locus and the movement direction of the gravity center (S203).

When the movement direction of the gravity center is a horizontal direction (X-axis direction) (1 in S204), the gesture recognition unit 34 determines whether the hand moves from the left to the right based on the movement locus (S205). When it is determined that the hand moves from the left to the right (YES in S205), the gesture recognition unit 34 recognizes the gesture input during the period as "00: move from left to right" (S206). On the other hand, when it is determined that the hand moves from the right to the left (NO in S205), the gesture recognition unit 34 recognizes the gesture input during the period as "01: move from right to left" (S207).

When the movement direction of the gravity center is a vertical direction (Y-axis direction) (2 in S204), the gesture recognition unit 34 determines whether the hand moves from the top to the bottom (S208). When the hand moves from the top to the bottom (YES in S208), the gesture recognition unit 34 recognizes the gesture input during the period as "10: move from top to bottom" (S209). On the other hand, when the hand moves from the bottom to the top (NO in S208), the gesture recognition unit 34 recognizes the gesture input during the period as "11: move from bottom to top" (S21 0).

When the movement direction of the gravity center rotates so as to draw a circle (3 in S204), the gesture recognition unit 34 determines whether the hand rotates clockwise (S211). When the hand rotates clockwise (YES in S211), the gesture recognition unit 34 recognizes the gesture input during the period as "30: rotate clockwise" (S212). On the other hand, when the hand rotates counterclockwise (NO in S211), the gesture recognition unit 34 recognizes the gesture input during the period as "31: rotate counterclockwise" (S213).

On the other hand, when the movement distance of the gravity center is insufficiently long (NO in S202), the gesture recognition unit 34 determines that the hand moves in neither the X-axis direction nor the Y-axis direction. The flow goes to processing of determining whether the hand moves in the Z-axis direction. That is, the gesture recognition unit 34 acquires the area (the number of sensors) of the change region specified by the change amount calculator 32 in each detection time Tᵢ (S214).

The gesture recognition unit 34 determines whether the area of the change region tends to be increased as time elapses (S215). When the area of the change region tends to be increased (YES in S215), the gesture recognition unit 34 recognizes the gesture input during the period as "20: move hand close to apparatus" (S216). On the other hand, when the area of the change region tends to be decreased (NO in S215), the gesture recognition unit 34 recognizes the gesture input during the period as "21: move hand away from apparatus" (S217).

The case in which not only the movement of the gravity center but also the increase of decrease in area are not generated is not described in the example illustrated in Fig. 14. Possibly the case is generated when the gesture recognition apparatus 1 mistakenly recognizes the object or when the gesture recognition apparatus 1 recognizes that the object remains still because of the insufficient motion of the object. Therefore, in such cases, preferably the gesture recognition apparatus 1 displays a message on the smartphone 100 so as to encourage the user to change the reference value or the threshold, displays an error message indicating a failure of the gesture recognition, or displays a message so as to encourage the user to input the gesture again.

As described above, the gesture recognition apparatus 1 of the invention includes the sensor unit 2 that detects the temperature at the object and the data processor 10 that performs the series of pieces of gesture recognition processing, so that the gesture recognition apparatus 1 can construct the non-contact input apparatus of the smartphone 100.

According to the above configuration and method, in the gesture recognition apparatus 1, the information detecting the motion of the object is acquired as the temperature information with the plurality of infrared sensors. The data processor 10 can analyze the motion of the object using only the temperature information without dealing with a huge amount of image data, and can recognize the gesture. As a result, the improvement of the processing efficiency and the reduction of the processing load can be achieved in the gesture recognition apparatus 1 that is of the input apparatus. That is, the input apparatus having a high reaction speed can be constructed.

In the gesture recognition apparatus 1 of the invention, the surface temperature of the object is acquired with the infrared sensors, and the motion of the object is detected by the difference between the temperature of the object and the environmental temperature. Accordingly, in a configuration in which the object is captured with an optical system camera to recognize the gesture, there is a limitation to the use of the configuration in a dark space. However, the gesture recognition apparatus of the invention can act as the input apparatus with no limitation in the dark space.

In the gesture recognition in which the optical system camera is used, in the case of a little difference of a texture between the object and a background, the position and the shape of the object cannot correctly be recognized, but unfortunately the false recognition of the gesture is increased. On the other hand, in the gesture recognition apparatus 1 of the invention, the problem of the false recognition due to similarity of the texture is not generated, because the object (such as the hand) having the surface temperature different from the environmental temperature is detected based on the temperature information.

When the gesture recognition apparatus 1 of the invention is used as the input apparatus of the electronic apparatus having a projector function, an advantage of the gesture recognition apparatus 1 of the invention can maximally be exerted.

For example, it is conceivable that, using the projector function of the electronic apparatus, a slide such as a photograph stored in the electronic apparatus is projected to a distant screen to perform a presentation. Because generally the projector function is utilized while the room is darkened, it is difficult that the gesture recognition input apparatus in which the conventional optical system camera is used functions during the presentation. However, because the gesture recognition apparatus 1 of the invention can function as the non-contact input apparatus even in the dark place, the user who performs the presentation in the position distant from the electronic apparatus can easily manipulate the slide without touching the electronic apparatus.

### [Modification]

In the first embodiment, the gesture recognition apparatus 1 processes the temperature information acquired from the whole surface (all the infrared sensors) of the temperature sensor chip 6 to recognize the gesture. The gesture recognition apparatus 1 of the invention is not limited to the configuration of the first embodiment, but the gesture recognition may be performed using partially the pieces of temperature information acquired from the infrared sensors arranged in the temperature sensor chip 6.

The configuration in which the infrared sensor is selectively used can reduce the processed information amount to enhance the processing speed, and the configuration can enhance accuracy of the gesture recognition when the specific gesture is recognized.

The multi-function smartphone 100 is configured to perform various applications, and an input format of an instruction to the application depends on the application. For example, the instruction input with the horizontal motion is performed in order to turn over a page in the case of a book browsing application or a slide show display application, and the instruction input with the vertical motion is performed in order to scroll the screen in a Web browsing application. It is assumed that the motion input of the rotation of a dial in a multi-stage manner is performed in order to adjust a volume in a music play application.

Therefore, in the gesture recognition apparatus 1 of the invention, the gesture that should be recognized is restricted based on which application is activated by the smartphone 100, and the gesture recognition processing suitable to the restricted gesture recognition can efficiently be performed. Therefore, the gesture recognition apparatus 1 includes the following unit.

As illustrated in Fig. 1, the data processor 10 of the gesture recognition apparatus 1 of the modification further includes a mask selector 35.

The mask selector 35 restricts a kind of the gesture that should be recognized according to the kind of the application activated by the main body of the smartphone 100, and selects a mask suitable to the recognition of the restricted gesture.

The mask of the invention means pattern information indicating which temperature acquired from the infrared sensor is used or not used in the infrared sensors arranged in the temperature sensor chip 6.

The mask is previously designed according to the kind of the gesture such that the gesture can efficiency and accurately be recognized, and the plurality of kinds of the masks are prepared. In the modification, as illustrated in Fig. 1, the storage 4 of the gesture recognition apparatus 1 includes the mask storage 41. The plurality of kinds of the masks are stored in the mask storage 41, and the mask that should be referred to is correlated in each application.

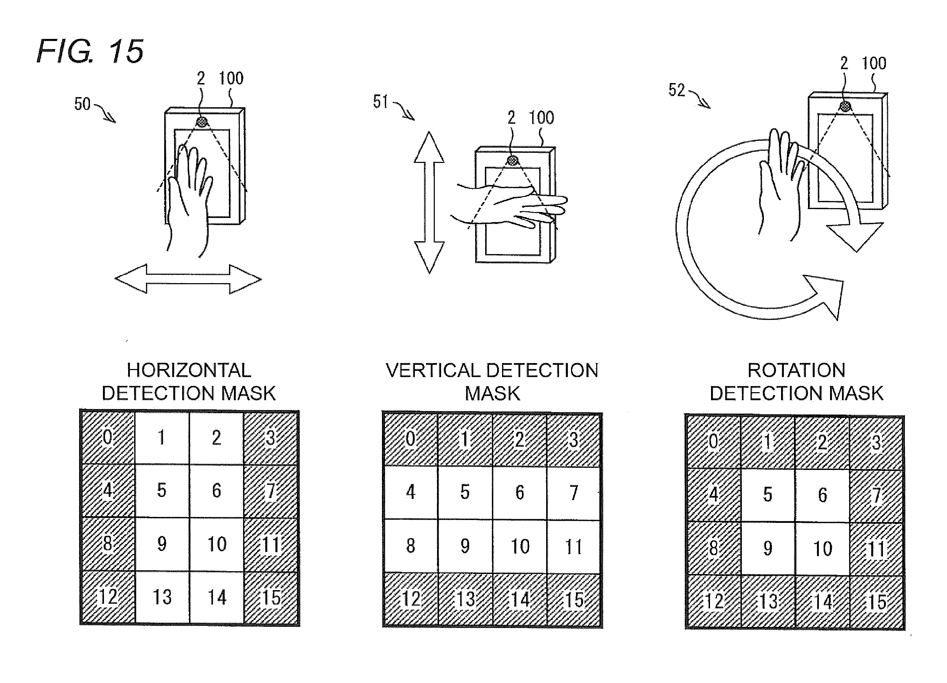

Fig. 15 is a view illustrating a specific example of the mask.

Assuming that the gesture is specialized in the gesture in which the hand moves in the horizontal direction like a scene 50 illustrated in Fig. 15, the gesture can efficiency and correctly be recognized when the hand can be detected in the right time with the sensors at the left end and the right end in the surface in which the infrared sensors are arranged in the temperature sensor chip 6. Therefore, a "horizontal detection mask" that is used to recognize the horizontal motion is designed such that a column at the left end and a column at the right end of the arrangement surface are validated and such that a center column is invalidated.

In the mask illustrated in Fig. 15, a hatched region indicates the validity, and a white region indicates the invalidity. The description will specifically be made by taking the 4-by-4 arrangement illustrated in Fig. 4 as an example. The "horizontal detection mask" is designed so as to use only the pieces of temperature information from the infrared sensors having the addresses 0, 4, 8, 12, 3, 7, 11, and 15.

Assuming that the gesture is specialized in the gesture in which the hand moves in the vertical direction like a scene 51, the gesture can efficiently and correctly be recognized when the hand can be detected in the right time with the sensors at the upper end and the lower end in the arrangement surface. Therefore, a "vertical detection mask" that is used to recognize the vertical motion is designed such that a row at the upper end and a row at the lower end of the arrangement surface are validated and such that a center row is invalidated.

As illustrated in Fig. 15, the "vertical detection mask" is designed so as to use only the pieces of temperature information from the infrared sensors having the addresses 0 to 3 and 12 to 15.

Assuming that the gesture is specialized in the gesture in which the hand rotates like a scene 52, the gesture of the rotation can efficiently and correctly be recognized when the hand can be detected with the sensors located outside in the arrangement surface. Therefore, a "rotation detection mask" is designed so as to use only the pieces of temperature information from the infrared sensors having the addresses 0 to 4, 7, 8, and 11 to 15.

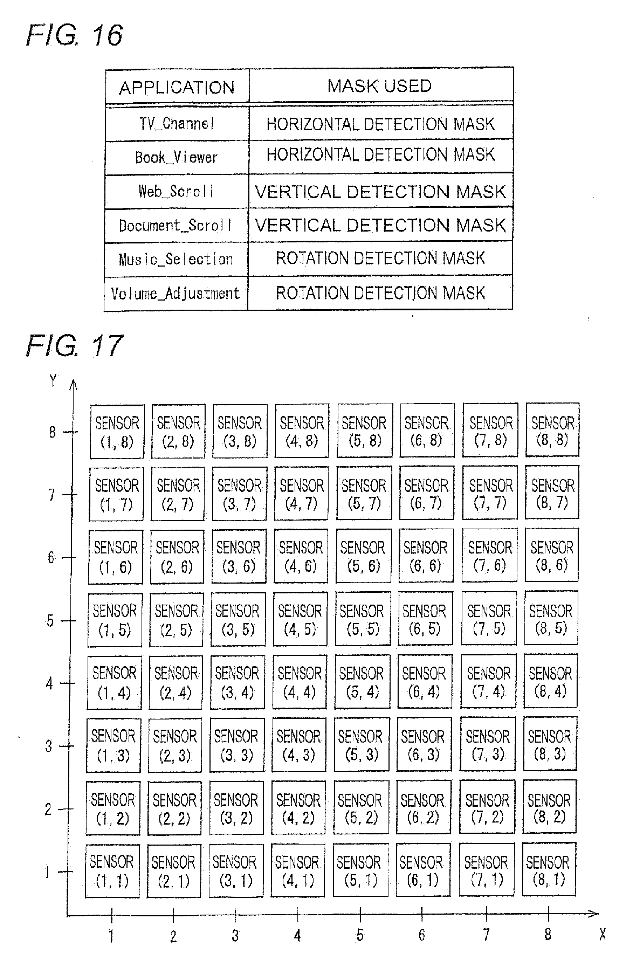

Thus, the plurality of kinds of the masks corresponding to the scene (the motion of the hand to be detected) are stored in the mask storage 41. Fig. 16 is a view illustrating an example of the data structure of the mask stored in the mask storage 41.

As illustrated in Fig. 16, while the plurality of kinds of the masks are stored in the mask storage 41, the correspondence of the mask that should be referred to in each application is stored in the mask storage.

Therefore, the mask selector 35 can always select the optimum mask according to the application activated by the smartphone 100. More particularly, the mask selector 35 acquires state information d3 indicating which application is currently activated by the main body of the smartphone 100 from the main controller of the smartphone 100 through the connector 5 and the communication controller 11 (see Fig. 1). The mask selector 35 specifies the activating application based on the state information d3. The mask selector 35 refers to the mask storage 41 to select the mask corresponding to the specified application.

When the application is specified, the input of the motion is restricted as the gesture in the application. For example, the vertical motion is input in a web browsing application, the horizontal motion is input in the book browsing application, and the rotational motion is input in the music play application.

In the example illustrated in Fig. 16, the horizontal detection mask is correlated to a TV application (TV_Channel). When determining that the smartphone 100 currently activates the TV application, the mask selector 35 selects the horizontal detection mask illustrated in Fig. 15.

When the mask selector 35 selects the horizontal detection mask, each unit of the data processor 10 can efficiently and correctly recognize the horizontal motion. Specifically the temperature information acquiring unit 30 acquires the temperature only from the infrared sensor in the effective region, and each unit performs each piece of processing only to the temperature stored in the effective region.

Because the user inputs only the horizontal gesture in order to change a channel during the use of the TV application, operability of the smartphone 100 can be improved when the horizontal motion can efficiently and correctly be recognized.

Fig. 16 illustrates the correspondence between the application and the mask only by way of example, but the configuration of the invention is not limited to the example of Fig. 16. The application corresponds previously to the optimum mask in consideration of the gesture necessary for the application.

As described above, the mask selected by the mask selector 35 is designed so as to be specialized in each motion to efficiently and accurately perform the gesture recognition of the motion. Therefore, the gesture that is input for the application can efficiently and accurately be recognized by selecting the mask suitable to each application.

The mask selector 35 may specify the address of the effective sensor based on the selected mask and issue an instruction to acquire the infrared signal only from the sensor having the effective address to the signal selector 13 of the signal processor 7. Alternatively, the mask selector 35 may issue an instruction to process only the temperature from the sensor having the effective address to each unit of the data processor 10.

### Second Embodiment

In the gesture recognition apparatus 1 of the first embodiment, the 4-by-4 infrared sensor is used as the temperature sensor chip 6, and the 4-by-4 temperature information acquired from the 4-by-4 infrared sensor is processed to recognize the gesture.

However, the gesture recognition apparatus 1 of the invention is not limited to the configuration of the first embodiment. The arrangement of the infrared sensors of the temperature sensor chip 6 can be configured in various ways. For example, the arrangement of the infrared sensors is not limited to the square shape, but the infrared sensors mat be arranged into a rectangular shape or a circular shape. The high-resolution temperature sensor chip 6 may be constructed by increasing the number of infrared sensors. In this case, only by the use of the temperature information, the plurality of objects (for example, motions of both hands) can be detected, or not only the position of the object but also the detailed shape can be detected. Therefore, a calculation amount is not significantly increased unlike an image processing technology, but more gestures can be identified to perform the complicated manipulation input to the electronic apparatus.

Assuming that 8 x 8 = 64 infrared sensors are arranged in the temperature sensor chip 6, a configuration of the gesture recognition apparatus 1 and a gesture recognition method will be described below when the gesture recognition apparatus 1 processes the temperatures of the 64 sensors to recognize the gesture. For the sake of convenience, the component having the same function as the first embodiment is designated by the same numeral, and the description is omitted.

### [Configuration of Gesture Recognition Apparatus]

In the gesture recognition apparatus 1 of the second embodiment, the data processor 10 further includes a variation calculator 36 as illustrated in Fig. 1.

The variation calculator 36 calculates a variation in the change region based on the pieces of information generated by the coordinate disposing unit 31, the change amount calculator 32, and the gravity center determination unit 33. The variation calculator 36 calculates a variation (σx²) in the X-axis direction and a variation (σy²) in the Y-axis direction in the change region.

The coordinate disposing unit 31 plots the temperature information in an 8-by-8 XY-coordinate system by the same method as the first embodiment. Fig. 17 is a view schematically illustrating a data structure of the temperature information after the coordinate disposing unit 31 plots the temperature from each sensor in the XY-coordinate system.

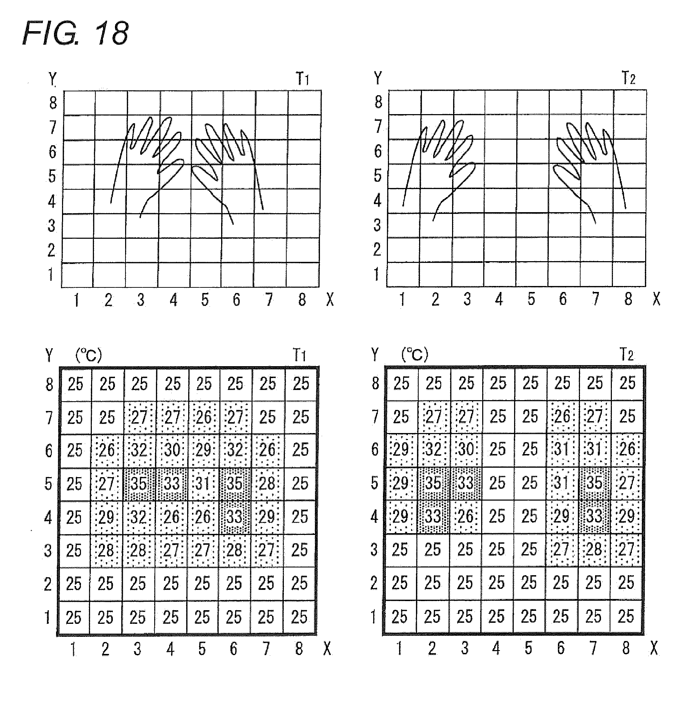

Then the change amount calculator 32 specifies the change region in each detection time based on the temperature information of the XY-coordinate system obtained in each detection time. Fig. 18 is a view illustrating a positional relationship between hands in each detection time and a relationship among the hands, the temperature information, and the change region, which are acquired in the detection time;

In the time T₁ in which the hands located close to each other, the change regions (halftone region) are gathered in the center as illustrated in the XY-coordinate system T₁. On the other hand, in the time T₂ in which the hands are horizontally separated from each other, the change regions vary horizontally as illustrated in the XY-coordinate system T₂.

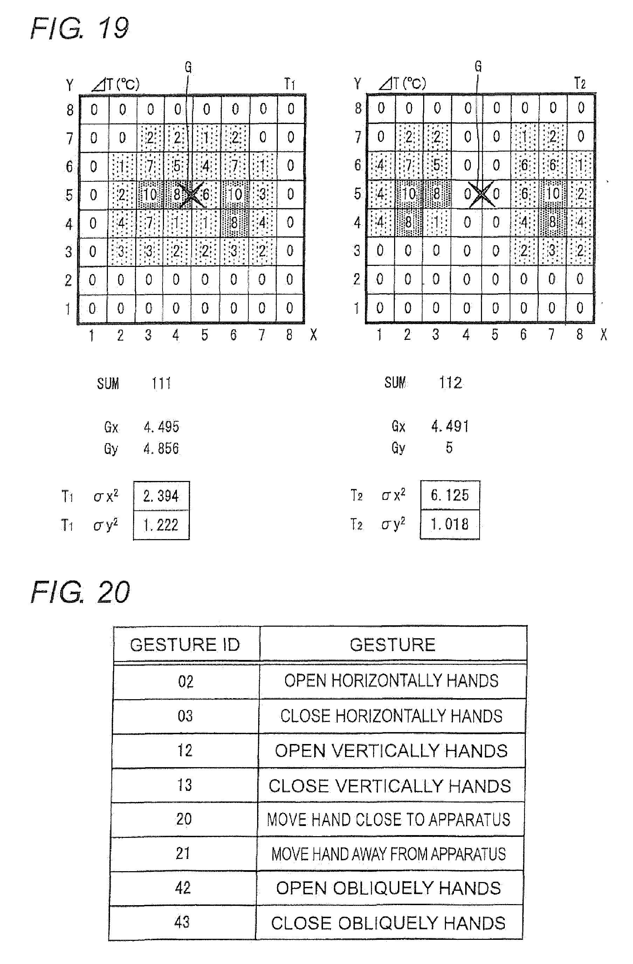

Then the change amount calculator 32 obtains the change amount ΔT in each coordinate position, and obtains the SUM. The gravity center determination unit 33 determines the coordinate position (Gx, Gy) of the gravity center G in each detection time based on the change amounts ΔT and the SUM. Fig. 19 is a view illustrating specific examples of the pieces of information generated by the change amount calculator 32, the pieces of information generated by the gravity center determination unit 33, and the pieces of information generated by the variation calculator 36 in the times T₁ and T₂ illustrated in Fig. 18.

As illustrated in Fig. 19, when the change amount ΔT(X, Y) in each coordinate position, the sum SUM of the change amounts, and the coordinate position (Gx, Gy) of the gravity center G in the change region are obtained, the variation calculator 36 calculates the variation in the change region based on the change amount ΔT(X, Y), the sum SUM, and the coordinate position (Gx, Gy). Specifically, the variation calculator 36 calculates the variation (σx²) in the X-axis direction and the variation (σy²) in the Y-axis direction in the change region based on the following equation. That is, σx²= {(ΔT(1,1) + ΔT(1,2) + ΔT(1,3) + ΔT(1,4) + ΔT(1,5) + ΔT(1,6) + ΔT(1,7) + ΔT(1,8)) x (1-Gx) + (ΔT(2,1) + ΔT(2,2) + ΔT(2,3) + ΔAT(2,4) + ΔT(2,5) + ΔT(2,6) + ΔT(2,7) + ΔT(2,8)) x (2-Gx) + (ΔT(3,1) + ΔT(3,2) + ΔT(3,3) + ΔT(3,4) + ΔT(3,5) + ΔT(3,6) + ΔT(3,7) + ΔT(3,8)) x (3-Gx) + (ΔT(4,1) + ΔT(4,2) + ΔT(4,3) + ΔT(4,4) + ΔT(4,5) + ΔT(4,6) + ΔT(4,7) + ΔT(4,8)) x (4-Gx) + (ΔT(5,1) + ΔT(5,2) + ΔT(5,3) + ΔT(5,4) + ΔT(5,5) + ΔT(5,6) + ΔT(5,7) + ΔT(5,8)) x (5-Gx) + (ΔT(6,1) + ΔT(6,2) + AT(6,3) + ΔT(6,4) + ΔT(6,5) + ΔT(6,6) + ΔT(6,7) + ΔT(6,8)) x (6-Gx) + (ΔT(7,1) + ΔT(7,2) + ΔT(7,3) + ΔT(7,4) + ΔT(7,5) + ΔT(7,6) + ΔT(7,7) + ΔT(7,8)) x (7-Gx) + (ΔT(8,1) + ΔT(8,2) + ΔT(8,3) + ΔT(8,4) + ΔT(8,5) + ΔT(8,6) + ΔT(8,7) + ΔT(8,8)) x (8 - Gx)} / SUM, and σy² = {(ΔT(1,1) + ΔT(2,1) + ΔT(3,1) + ΔT(4,1) + ΔT(5,1) + ΔT(6,1) + ΔT(7,1) + ΔT(8,1)) × (1-Gy) + (ΔT(1,2) + ΔT(2,2) + ΔT(3,2) + ΔT(4,2) + ΔT(5,2) + ΔT(6.2) + ΔT(7,2) + ΔT(8,2)) × (2-Gy) + (ΔT(1,3) + ΔT(2,3) + ΔT(3,3) + ΔT(4,3) + ΔT(5,3) + ΔT(6,3) + ΔT(7,3) + ΔT(8,3)) × (3-Gy) + (ΔT(1,4) + ΔT(2,4) + ΔT(3,4) + ΔT(4,4) + ΔT(5,4) + ΔT(6,4) + ΔT(7,4) + ΔT(8,4)) × (4-Gy) + (ΔT(1,5) + ΔT(2,5) + ΔT(3,5) + ΔT(4,5) + ΔT(5,5) + ΔT(6.5) + ΔT(7,5) + ΔT(8,5)) x (5-Gy) + (ΔT(1,6) + ΔT(2,6) + ΔT(3,6) + ΔT(4,6) + ΔT(5,6) + ΔT(6,6) + ΔT(7,6) + ΔT(8,6)) x (6-Gy) +(ΔT(1,7) + ΔT(2,7) + ΔT(3,7) + ΔT(4,7) + ΔT(5,7) + ΔT(6,7) + ΔT(7,7) + ΔT(8,7)) x (7-Gy) + (ΔT(1,8) + ΔT(2,8) + ΔT(3,8) + ΔT(4,8) + ΔT(5,8) + ΔT(6,8) + ΔT(7,8) + ΔT(8,8)) x (8 - Gy)} / SUM.

In the example illustrated in Fig. 19, according to the above equation, the variation calculator 36 calculates the variation σx² in the X-axis direction as 2.394 and calculates the variation σx² in the X-axis direction as 1.222 in the time T₁. The variation calculator 36 calculates the variation σx² in the X-axis direction as 6.125 and calculates the variation σx² in the X-axis direction as 1.018 in the time T₂.

Finally the gesture recognition unit 34 recognizes the gestures of the hands based on a transition of the variation in each detection time, which is calculated by the variation calculator 36, and a transition of the area of the change region. Similarly to the first embodiment, the gesture patterns of the hands are stored in the gesture pattern storage 40.

Fig. 20 is a view illustrating examples of the gesture patterns stored in the gesture pattern storage 40 of the second embodiment.

As illustrated in Fig. 20, in addition to the gesture patterns illustrated in Fig. 12, some gesture patterns of the hands that can be recognized by the gesture recognition unit 34 are further stored in the gesture pattern storage 40. When the user uses the hands, various kinds of the gestures can be input to the apparatus by changing a distance between the hands (closing the hands or opening the hands).

In the second embodiment, the gesture recognition unit 34 refers to the variation calculated by the variation calculator 36, and can identify which direction the hands are opened or closed.

Specifically, as illustrated in Fig. 19, when the variation is increased in the X-axis direction with time elapse, the gesture recognition unit 34 determines that the hands are horizontally opened. On the other hand, when the variation is decreased, the gesture recognition unit 34 determines that the hands are horizontally closed from the state in which the hands are opened. Similarly, when the variation is increased in the Y-axis direction with time elapse, the gesture recognition unit 34 determines that the hands are vertically opened. On the other hand, when the variation is decreased, the gesture recognition unit 34 determines that the hands are vertically closed from the state in which the hands are vertically opened.

When the variations are increased in both the X-axis direction and the Y-axis direction, the gesture recognition unit 34 determines that the hands are obliquely opened or that possibly the hands are moved close to the apparatus in the Z-axis direction while the distance between the hands are kept constant. In this case, the gesture recognition unit 34 determines whether the hands are obliquely opened or the hands are moved close to the apparatus based on whether the area of the change region is increased.

When the variations are decreased in both the X-axis direction and the Y-axis direction, the gesture recognition unit 34 determines that the hands are obliquely closed or that possibly the hands are moved away from the apparatus in the Z-axis direction while the distance between the hands are kept constant. In this case, the gesture recognition unit 34 determines whether the hands are obliquely closed or the hands are moved away from the apparatus based on whether the area of the change region is decreased.

When the variations are not largely changed in both the X-axis direction and the Y-axis direction, the gesture recognition unit 34 determines that the distance between the hands are not changed and that the hands are not moved in the Z-axis direction. Therefore, because the gesture recognition procedure for one hand of the first embodiment can be applied in this case, the gesture recognition unit 34 determines the motions of the hands in the X-axis direction or the Y-axis direction by the procedure illustrated in Fig. 14.

### [Flow of Gesture Recognition Processing]

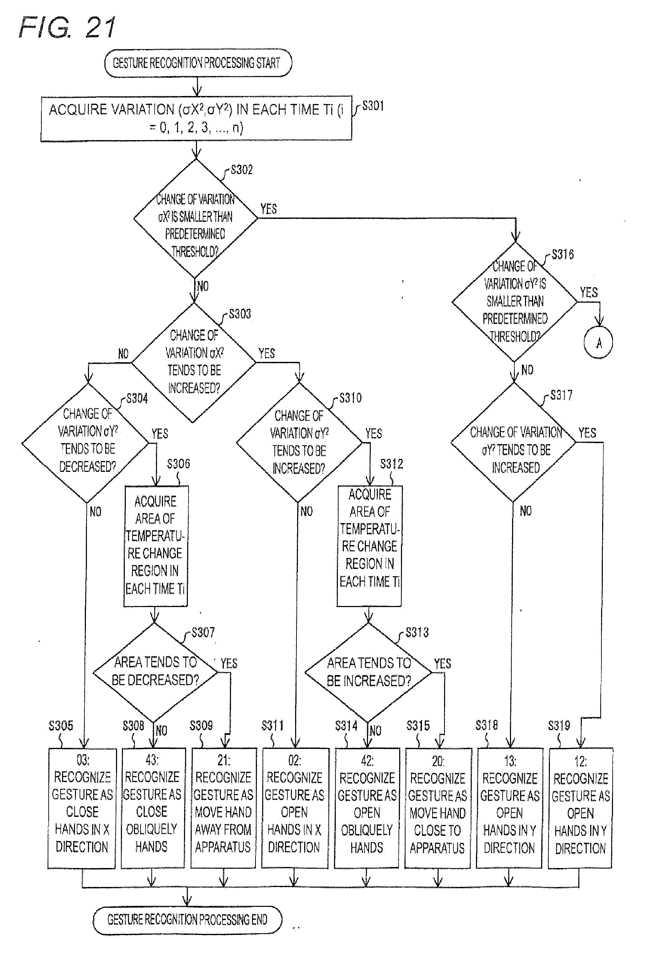

Fig. 21 is a flowchart illustrating a detailed flow of the gesture recognition processing performed by the gesture recognition unit 34 of the second embodiment.

First the flow of the gesture recognition processing performed by each unit of the data processor 10 of the second embodiment will be described with reference to Fig. 13. The second embodiment differs from the first embodiment in that the variation calculator 36 obtains the variations σX² and σY2 in each detection time and that the variations σX² and σY² are retained while correlated with the time Tᵢ.

The gesture recognition processing in S111 of the second embodiment will be described with reference to Fig. 21.

The gesture recognition unit 34 acquires the variations σX² and σY² in each time Tᵢ in the predetermined period (To to Tₙ) (S301). The gesture recognition unit 34 determines the change (increased, decreased, or not changed) of the variation as time elapses.

When the variation σX² is changed (NO in S302), the gesture recognition unit 34 determines whether the variation σX² tends to be increased or decreased (S303).

When the variation σX² tends to be decreased (NO in S303), the gesture recognition unit 34 determines whether the variation σY² tends to be decreased (S304).

When the variation σY² does not tend to be decreased, namely, when the variation σY² tends to be increased or when the variation σY² is not changed (NO in S304), the gesture recognition unit 34 recognizes the motion detected in the predetermined period as the gesture of "03: close horizontally hands" based on the motion in the X-axis direction (S305). On the other hand, when the variation σY² tends to be decreased, namely, when both the variations σX² and σY² tend to be decreased (YES in S304), the gesture recognition unit 34 acquires the area of the change region in each time Tᵢ (S306). The gesture recognition unit 34 determines whether the area of the change region tends to be decreased as time elapses (S307). When the area of the change region does not tend to be decreased (NO in S307), namely, when the area does not change, the gesture recognition unit 34 recognizes the motion detected in the predetermined period as the gesture of "43: close obliquely hands" (S308). On the other hand, when the area of the change region tends to be decreased (YES in S307), the gesture recognition unit 34 recognizes the motion detected in the predetermined period as the gesture of "21: move hand away from apparatus" (S309).

When the variation σX² tends to be increased (YES in S303), the gesture recognition unit 34 determines whether the variation σY² tends to be increased (S310).

When the variation σY² does not tend to be increased, namely, when the variation σY² tends to be decreased or when the variation σY² is not changed (NO in S310), the gesture recognition unit 34 recognizes the motion detected in the predetermined period as the gesture of "02: open horizontally hands" based on the motion in the X-axis direction (S311). When the variation σY² tends to be increased, namely, when both the variations σX² and σY² tend to be increased (YES in S310), the gesture recognition unit 34 acquires the area of the change region in each time Tᵢ (S312). The gesture recognition unit 34 determines whether the area of the change region tends to be increased as time elapses (S313). When the area of the change region does not tend to be increased (NO in S313), the gesture recognition unit 34 recognizes the motion detected in the predetermined period as the gesture of "42: open obliquely hands" (S314). On the other hand, when the area of the change region tends to be increased (YES in S313), the gesture recognition unit 34 recognizes the motion detected in the predetermined period as the gesture of "20: move hand close to apparatus" (S315).

When the variation σX² is not changed (YES in S302), the gesture recognition unit 34 determines whether the variation σY² is increased or decreased (S316).

When the variation σY² is not changed, namely, when both the variations σX² and σY² are not changed (YES in S316), the gesture recognition unit 34 recognizes the gesture by performing the gesture recognition processing illustrated in Fig. 14 based on the locus of the gravity center. When the variation σY² is changed (NO in S316), the gesture recognition unit 34 determines whether the variation σY² tends to be increased or decreased (S317).

When the variation σY² tends to be decreased (NO in S317), the gesture recognition unit 34 recognizes the motion detected in the predetermined period as the gesture of "13: close vertically hands" (S318). When the variation σY² tends to be increased (YES in S317), the gesture recognition unit 34 recognizes the motion detected in the predetermined period as the gesture of "12: open vertically hands" (S319).

According to the configuration and method of the second embodiment, compared with the first embodiment, the plurality of objects or the shape of the object can be recognized by acquiring the higher-resolution temperature information d1. Accordingly, the input apparatus that can perform various manipulation inputs without dealing with the huge amount of information unlike the image processing technology can be constructed.

In the second embodiment, the gesture recognition apparatus 1 recognizes the opening and closing gestures of the hands. However, the gesture recognition apparatus 1 of the invention is not limited to the configuration of the second embodiment. The gesture recognition apparatus 1 of the invention can recognize the opening and closing gestures of fingers of one hand based on the above procedure.

### [Second Modification]

In the first and second embodiments, the sensor unit 2 and the gesture recognition apparatus 1 (smartphone 100) are integrated. However, the gesture recognition apparatus 1 of the invention is not limited to the configurations of the first and second embodiments.

For example, the sensor unit 2 is placed distant from the gesture recognition apparatus 1, and the gesture recognition apparatus 1 may acquire the detection signal of the sensor unit 2 using a proper communication unit. That is, it is not necessary for the gesture recognition apparatus 1 to include the sensor unit 2. In this case, the gesture recognition apparatus 1 may include a proper communication unit that acquires the detection signal from the sensor unit 2.

The invention is not limited to the embodiments, but various changes can be made without departing from the scope of the invention. The embodiment obtained by properly combining technical means disclosed in the different embodiments is also included in the technical scope of the invention.

Each block of the gesture recognition apparatus 1, particularly each unit of the data processor 10 may be configured by a hardware logic or constructed by software using the CPU (Central Processing Unit).

That is, the gesture recognition apparatus 1 includes the CPU that executes a command of a control program to implement each function, a ROM (Read Only Memory) in which the program is stored, a RAM (Random Access Memory) in which the program is developed, and a storage device (recording medium) such as a memory in which the program and various kinds of data are stored. The object of the invention can also be achieved such that the computer-readable recording medium in which a program code (executable format program, intermediate code program, and source program) of the control program for the gesture recognition apparatus 1, which is of the software implementing the functions, are recorded is supplied to the gesture recognition apparatus 1 and such that the computer (or CPU or MPU) reads and executes the program code recorded in the recording medium.

Examples of the recording medium include a tape system such as a magnetic tape and a cassette tape, a disk system including a magnetic disk such as a Floppy disk (registered trademark) and a hard disk and an optical disk such as a CD-ROM, a MO, an MD, a DVD, and a CD-R, a card system such as an IC card (including a memory card) and an optical card, and a semiconductor memory system such as a mask ROM, an PROM, an EEPROM, and a flash ROM.

The gesture recognition apparatus 1 may be configured so as to be connected to a communication network, and supply the program code through the communication network. There is no particular limitation to the communication network. For example, the Internet, an intranet, an extranet, a LAN, an ISDN, a VAN, a CATV communication network, a virtual private network, a telephone line network, a mobile communication network, and a satellite communication network can be used as the communication network. There is no particular limitation to a transmission medium constituting the communication network. For example, wired lines such as IEEE 1394, a USB, a power-line carrier, a cable TV line, a telephone line, and an ADSL line and wireless lines such as an infrared tray of IrDA and a remote controller, Bluetooth (registered trademark), 802.11 wireless, HDR, a mobile phone network, a satellite line, and a digital terrestrial network can be used as the transmission medium. The invention can also be implemented in a mode of a computer data signal embedded in a carrier, which is embodied in electronic transmission of the program code.

The gesture recognition apparatus of the invention can be incorporated in various pieces of electronic apparatus such as the smartphone, the mobile phone, the PDA, the portable game machine, the electronic dictionary, the electronic databook, the digital camera, the digital video camera, the personal computer, the notebook-size personal computer, the television set, the video player, and the home-use game machine, and the gesture recognition apparatus can exert the input functions of the pieces of electronic apparatus. Particularly the gesture recognition apparatus of the invention can effectively be used as the input apparatus of the electronic apparatus having the projector function.

## Claims

1. A gesture recognition apparatus (1) comprising:
a temperature sensor (6) in which a plurality of infrared sensors are arranged;
a change region specifying unit (32) that specifies a change region where a temperature change is generated as a region indicating a hand based on a temperature detected by each infrared sensor of the temperature sensor (6); and
a gesture recognition unit (34) that specifies a movement locus of the change region specified by the change region specifying unit (32) and recognizes a gesture of the hand.

2. The gesture recognition apparatus (1) according to claim 1, further comprising a gravity center determination unit (33) that determines a gravity center of the change region specified by the change region specifying unit (32), **characterized in that**
the gesture recognition unit (34) specifies the movement locus by tracing a position of the gravity center.

3. The gesture recognition apparatus (1) according to claim 2, further comprising a change amount calculator (32) that calculates temperature change amount in each infrared sensor by comparing the temperature detected by each infrared sensor to a predetermined reference temperature, **characterized in that**
the gravity center determination unit (33) determines the gravity center of the change region based on the temperature change amount obtained in each infrared sensor.

4. The gesture recognition apparatus (1) as in any one of claims 1 to 3, further comprising:
a mask storage (41) in which a mask indicating an arrangement pattern of validity/invalidity in the plurality of infrared sensors is stored while correlated with a kind of an application of an electronic apparatus (100) connected to the gesture recognition apparatus (1); and
a mask selector (35) that selects the mask, which is correlated with the application currently activated by the electronic apparatus (110), from the mask storage (41), **characterized in that**
the change region specifying unit (32) specifies the change region based only on the temperature detected by the infrared sensor that is validated by the mask selected by the mask selector (35).

5. The gesture recognition apparatus (1) as in any one of claims 1 to 4, further comprising a variation calculator (36) that calculates a variation of the change region specified by the change region specifying unit (32), **characterized in that**
the gesture recognition unit (34) recognizes the gesture based on an increase or decrease of the variation with time elapse.

6. The gesture recognition apparatus (1) according to claim 5, **characterized in that** the gesture recognition unit (34) recognizes that hands or fingers move in a direction in which the hands or fingers are opened when the variation of the change region is increased, and the gesture recognition unit (34) recognizes that the hands or fingers move in a direction in which the hands or fingers are closed when the variation of the change region is decreased.

7. A gesture recognition method comprising the steps of:
acquiring a temperature at each of a plurality of infrared sensors from a temperature sensor (6) in which the infrared sensors are arranged;
specifying a change region where a temperature change is generated as a region indicating a hand based on the temperature detected by each infrared sensor; and
specifying a movement locus of the specified change region to recognize a gesture of the hand.

8. A control program that causes a computer to act as each unit of the gesture recognition apparatus (1) as in any one of claims 1 to 6.

9. A computer-readable recording medium in which the control program according to claim 8 is recorded.
